(19) Europäisches Patentamt
European Patent Office
Office européen des brevets

(11) **EP 4 560 958 A1**

(12) **EUROPEAN PATENT APPLICATION**
published in accordance with Art. 153(4) EPC

(43) Date of publication:
28.05.2025 Bulletin 2025/22

(21) Application number: 23845158.7

(22) Date of filing: 25.06.2023

(51) International Patent Classification (IPC):
*H04L 5/00* (2006.01)

(52) Cooperative Patent Classification (CPC):
H04L 5/00

(86) International application number:
PCT/CN2023/102086

(87) International publication number:
WO 2024/021945 (01.02.2024 Gazette 2024/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 27.07.2022 CN 202210891651
14.06.2023 CN 202310709256

(71) Applicant: Huawei Technologies Co., Ltd.
Shenzhen, Guangdong 518129 (CN)

(72) Inventors:
• LIAO, Shuri
  Shenzhen, Guangdong 518129 (CN)
• SHI, Meng
  Shenzhen, Guangdong 518129 (CN)
• ZHANG, Xiaoyu
  Shenzhen, Guangdong 518129 (CN)
• ZHANG, Jiayin
  Shenzhen, Guangdong 518129 (CN)
• DOU, Shengyue
  Shenzhen, Guangdong 518129 (CN)

(74) Representative: Pfenning, Meinig & Partner mbB
Patent- und Rechtsanwälte
Theresienhöhe 11a
80339 München (DE)

(54) **METHOD FOR TRANSMITTING SYNCHRONIZATION SIGNAL/PHYSICAL BROADCAST CHANNEL BLOCK, AND COMMUNICATION APPARATUS**

(57) Embodiments of this application provide a synchronization signal block transmission method and a communication apparatus. The method includes: A terminal device receives at least one of N SSBs; and the terminal device determines a time position of a first SSB based on a number of the first SSB in the at least one SSB and a sending parameter, where the sending parameter is used to determine N candidate sending positions for transmitting the N SSBs in one periodicity T1, the N candidate sending positions are in at least two system frames, and the sending parameter includes one or more of the following parameters: a sweeping periodicity T3, a quantity of candidate sending positions included in each system frame, a time interval between two consecutive system frames of candidate sending positions included in each periodicity T1, and a quantity of system frames of the candidate sending positions included in each periodicity T1. According to this application, more SSBs can be transmitted in one periodicity T1.

Method 400

Network device

S410: Determine N candidate sending positions based on a sending parameter

S420: At least one SSB

Terminal device

S430: Determine a time position of the at least one SSB based on a number of the at least one SSB and the sending parameter

FIG. 4

## Description

This application claims priority to Chinese Patent Application No. 202210891651.9, filed with the China National Intellectual Property Administration on July 27, 2022 and entitled "SYNCHRONIZATION SIGNAL BLOCK TRANSMISSION METHOD AND COMMUNICATION APPARATUS", and to Chinese Patent Application No. 202310709256.9, filed with the China National Intellectual Property Administration on June 14, 2023 and entitled "SYNCHRONIZATION SIGNAL BLOCK TRANSMISSION METHOD AND COMMUNICATION APPARATUS", which are incorporated herein by reference in their entireties.

## TECHNICAL FIELD

Embodiments of this application relate to the communication field, and more specifically, to a synchronization signal block transmission method and a communication apparatus.

## BACKGROUND

A synchronization signal/physical broadcast channel block (synchronization signal/physical broadcast channel block, SSB) is defined in a $5^{th}$ generation ($5^{th}$ generation, 5G) communication system, and the synchronization signal/physical broadcast channel block may also be referred to as a synchronization signal block. The SSB includes a primary synchronization signal (primary synchronization signal, PSS), a secondary synchronization signal (secondary synchronization signal, SSS), and a physical broadcast channel (physical broadcast channel, PBCH).

To access a network, a terminal device may perform cell search and obtain cell system information. For example, the terminal device may search for the SSB, to achieve downlink synchronization with a cell. Then, the terminal device needs to obtain the cell system information (system information), establish a connection to the cell through a random access procedure (random access procedure), and achieve uplink synchronization.

In an existing 3GPP protocol, a control beam sweeping process is performed to complete sending of SSBs corresponding to different beams. An FR1 frequency band supports a maximum of eight beams in a single cell, and an FR2 frequency band supports a maximum of 64 beams in a single cell. However, with development of technologies, in some scenarios, for example, in a satellite communication system, 64 beams cannot meet a requirement of full coverage of beam sweeping.

## SUMMARY

Embodiments of this application provide a synchronization signal block (synchronization signal/physical broadcast channel block, SSB) transmission method and a communication apparatus, to transmit more synchronization signal blocks.

According to a first aspect, an SSB transmission method is provided. The method may be performed by a terminal device, or may be performed by a component (for example, a chip or a circuit) of the terminal device. This is not limited. For ease of description, the following uses an example in which the method is performed by the terminal device for description.

The method may include: The terminal device receives at least one of N SSBs; and the terminal device determines a time position of a first SSB based on a number of the first SSB in the at least one SSB and a sending parameter. The sending parameter is used to determine N candidate sending positions for transmitting the N SSBs in one periodicity T1, the N candidate sending positions are in at least two system frames, and the sending parameter includes one or more of the following parameters: a sweeping periodicity T3, a quantity Y of candidate sending positions included in each system frame, a time interval T2 between two consecutive system frames of candidate sending positions included in each periodicity T1, and a quantity X of system frames of the candidate sending positions included in each periodicity T1. T1, Y, T3, and T2 are positive integers, and N and X are integers greater than 1.

Based on the foregoing technical solution, the N candidate sending positions for transmitting the N SSBs in one periodicity are in the at least two system frames, and N may be greater than 8 or 64. For example, when the N candidate sending positions are in two system frames, and each system frame includes 64 candidate sending positions, N is equal to 128. Further, when the SSBs are transmitted at the N candidate sending positions, more SSBs can be transmitted, to help meet a sweeping requirement of single-satellite coverage.

With reference to the first aspect, in some implementations of the first aspect, the first SSB includes a physical broadcast signal (physical broadcast channel, PBCH), and the PBCH includes system frame number (system frame number, SFN) indicator bits and/or a half-frame indicator bit. The SFN indicator bits and/or the half-frame indicator bit are/is used to determine the number of the first SSB.

Based on the foregoing technical solution, the SFN indicator bits may include 10 bits, and the half-frame indicator bit may include one bit. Therefore, when the number of the first SSB is indicated by the SFN indicator bits and/or the half-frame indicator bit, a maximum value of the number of the first SSB may be 2047 (that is, $2^{11}$-1). In other words, when the number of the first SSB ranges from 0 to 2047, the number of the first SSB may be indicated by the SFN indicator bits and/or the half-frame indicator bit, so that the terminal device may determine the number of the first SSB based on the SFN indicator bits, and determine the time position of the first SSB based on the number of the first SSB, to implement synchronization with a network device.

Optionally, the number of the first SSB is indicated only by the SFN indicator bits. Alternatively, the number of the first SSB is indicated by the SFN indicator bits and the half-frame indicator bit. Alternatively, the number of the first SSB is indicated by the SFN indicator bits and at least one of the following: a demodulation reference signal (dedicated modulate reference signal, DMRS) sequence index or an SSB index in the PBCH. Alternatively, the number of the first SSB is indicated by the half-frame indicator bit and at least one of the following: a DMRS sequence index or an SSB index in the PBCH. Alternatively, the number of the first SSB is indicated by the SFN indicator bits, the half-frame indicator bit, and at least one of the following: a DMRS sequence index or an SSB index in the PBCH.

With reference to the first aspect, in some implementations of the first aspect, the PBCH includes the SFN indicator bits, and the number of the first SSB is represented by using $\lceil \log_2 N \rceil$ bits. When N>8, $\lceil \log_2 N \rceil - 3$ bits in the SFN indicator bits are used to determine the number of the first SSB, where $\lceil \ \rceil$ represents rounding up; when N>32, $\lceil \log_2 N \rceil - 5$ bits in the SFN indicator bits are used to determine the number of the first SSB; when N>64, $\lceil \log_2 N \rceil - 6$ bits in the SFN indicator bits are used to determine the number of the first SSB; or when N>128, $\lceil \log_2 N \rceil - 6$ bits or $\lceil \log_2 N \rceil - 7$ bits in the SFN indicator bits are used to determine the number of the first SSB.

For example, when N is greater than 8, the number of the first SSB may be indicated by the DMRS sequence index and the SFN indicator bits. The DMRS sequence index occupies three bits, and the SFN indicator bits occupy $\lceil \log_2 N \rceil - 3$ bits. In other words, the $\lceil \log_2 N \rceil - 3$ bits in the SFN indicator bits are used to determine the number of the first SSB.

For example, when N is greater than 32, the number of the first SSB may be indicated by the SSB index, the DMRS sequence index, and the SFN indicator bits. The SSB index occupies two bits, the DMRS sequence index occupies three bits, and the SFN indicator bits occupy $\lceil \log_2 N \rceil$ -5 bits. In other words, the $\lceil \log_2 N \rceil - 5$ bits in the SFN indicator bits are used to determine the number of the first SSB.

For example, when N is greater than 64, the number of the first SSB may be indicated by the SSB index, the DMRS sequence index, and the SFN indicator bits. The SSB index occupies three bits, the DMRS sequence index occupies three bits, and the SFN indicator bits occupy $\lceil \log_2 N \rceil$ -6 bits. In other words, the $\lceil \log_2 N \rceil - 6$ bits in the SFN indicator bits are used to determine the number of the first SSB.

For another example, when N is greater than 128, the number of the first SSB may be indicated by the SSB index, the DMRS sequence index, the SFN indicator bits, and the half-frame indicator bit. The SSB index occupies three bits, the DMRS sequence index occupies three bits, the half-frame indicator bit occupies one bit, and the SFN indicator bits occupy $\lceil \log_2 N \rceil - 7$ bits.

With reference to the first aspect, in some implementations of the first aspect, the $\lceil \log_2 N \rceil$ -3 bits in the SFN indicator bits are used to determine the number of the first SSB, and the method further includes: The terminal device determines, based on the time interval T2, that the $\lceil \log_2 N \rceil$ -3 bits in the SFN indicator bits are a $(\log_2 (T2'' \cdot 2))^{th}$ bit to a $(\lceil \log_2 (N \cdot T2'' \cdot 2) \rceil - 4)^{th}$ bit in the SFN indicator bits; and the terminal device determines, based on the quantity Y of candidate sending positions included in each system frame, that the $(\log_2 (T2''. 2))^{th}$ bit to the $(\lceil \log_2 (N \cdot T2'' \cdot 2) \rceil - 4)^{th}$ bit in the SFN indicator bits are a $(\log_2 (Y \cdot 2))^{th}$ bit to a $(\lceil \log_2 (N \cdot Y \cdot 2) \rceil - 4)^{th}$ bit in the $\lceil \log_2 N \rceil$ bits. T2'' and Y are powers of 2. If T2 represents a quantity of system frames included in the time interval, T2'' = T2. If T2 represents duration of the time interval, T2'' = T2/T$_{frame}$. T$_{frame}$ represents duration of one system frame.

With reference to the first aspect, in some implementations of the first aspect, the $\lceil \log_2 N \rceil$ -5 bits in the SFN indicator bits are used to determine the number of the first SSB, and the method further includes: The terminal device determines, based on the time interval T2, that the $\lceil \log_2 N \rceil$ -5 bits in the SFN indicator bits are a $(\log_2 (T2'' \cdot 2))^{th}$ bit to a $(\lceil \log_2 (N \cdot T2'' \cdot 2) \rceil - 6)^{th}$ bit in the SFN indicator bits; and the terminal device determines, based on the quantity Y of candidate sending positions included in each system frame, that the $(109_2 (T2'' \cdot 2))^{th}$ bit to the $(\lceil \log_2 (N \cdot T2'' \cdot 2) \rceil - 6)^{th}$ bit in the SFN indicator bits are a $(\log_2 (Y \cdot 2))^{th}$ bit to a $(\lceil \log_2 (N \cdot Y \cdot 2) \rceil - 6)^{th}$ bit in the $\lceil \log_2 N \rceil$ bits.

With reference to the first aspect, in some implementations of the first aspect, the $\lceil \log_2 N \rceil$ -6 bits in the SFN indicator bits are used to determine the number of the first SSB, and the method further includes: The terminal device determines, based on the time interval T2, that the $\lceil \log_2 N \rceil$ -6 bits in the SFN indicator bits are a $(\log_2 (T2'' \cdot 2))^{th}$ bit to a $(\lceil \log_2 (N \cdot T2'' \cdot 2) \rceil - 7)^{th}$ bit in the SFN indicator bits; and the terminal device determines, based on the quantity Y of candidate sending positions included in each system frame, that the $(\log_2 (T2'' \cdot 2))^{th}$ bit to the $(\lceil \log_2 (N \cdot T2'' \cdot 2) \rceil - 7)^{th}$ bit in the SFN indicator bits are a $(\log_2 (Y \cdot 2))^{th}$ bit to a $(\lceil \log_2 (N \cdot Y \cdot 2) \rceil - 7)^{th}$ bit in the $\lceil \log_2 N \rceil$ bits.

With reference to the first aspect, in some implementations of the first aspect, the $\lceil \log_2 N \rceil$ -7 bits in the SFN indicator bits are used to determine the number of the first SSB, and the method further includes: The terminal device determines, based on the time interval T2, that the $\lceil \log_2 N \rceil$ -7 bits in the SFN indicator bits are a $(\log_2 (T2'' \cdot 2))^{th}$ bit to a $(\lceil \log_2 (N \cdot T2'' \cdot 2) \rceil - 8)^{th}$ bit in the SFN indicator bits; and the terminal device determines, based on the quantity Y of candidate sending positions included in each system frame, that the $(\log_2 (T2'' \cdot 2))^{th}$ bit to the $(\lceil \log_2 (N \cdot T2'' \cdot 2) \rceil - 8)^{th}$ bit in the SFN indicator bits are a $(\log_2 (Y \cdot 2))^{th}$ bit to a $(\lceil \log_2 (N \cdot Y \cdot 2) \rceil - 8)^{th}$ bit in the $\lceil \log_2 N \rceil$ bits.

With reference to the first aspect, in some implementations of the first aspect, the sending parameter includes the sweeping periodicity T3 and the time interval T2, and that the terminal device determines the time position of the first SSB based on the number of the first SSB and the sending parameter includes: The terminal device determines, based on the sweeping periodicity T3 and the time interval T2, the quantity X of system frames of the candidate sending positions included in each periodicity T1, where $X = \lceil T3/T2 \rceil$, and $\lceil \ \rceil$ represents rounding up; the terminal device determines, based on the quantity X of system frames of the candidate sending positions included in each periodicity T1, the quantity Y of candidate sending positions included in each system frame, where $Y = \lceil N/X \rceil$; and the terminal device determines, based on the number of the first SSB and the quantity Y of candidate sending positions included in each system frame, a start symbol index of the first SSB in a system frame in which the first SSB is located.

With reference to the first aspect, in some implementations of the first aspect, the sending parameter includes the quantity Y of candidate sending positions included in each system frame, and that the terminal device determines the time position of the first SSB based on the number of the first SSB and the sending parameter includes: The terminal device determines, based on the number of the first SSB and the quantity Y of candidate sending positions included in each system frame, a start symbol index of the first SSB in a system frame in which the first SSB is located.

With reference to the first aspect, in some implementations of the first aspect, the sending parameter includes the quantity X of system frames of the candidate sending positions included in each periodicity T1, and that the terminal device determines the time position of the first SSB based on the number of the first SSB and the sending parameter includes: The terminal device determines, based on the quantity X of system frames of the candidate sending positions included in each periodicity T1, the quantity Y of candidate sending positions included in each system frame, where Y= N/X ; and the terminal device determines, based on the number of the first SSB and the quantity Y of candidate sending positions included in each system frame, a start symbol index of the first SSB in a system frame in which the first SSB is located.

With reference to the first aspect, in some implementations of the first aspect, for the system frame including the first SSB, the terminal device determines, based on the number of the first SSB, the quantity Y of candidate sending positions included in the system frame, and a subcarrier spacing of the first SSB, the start symbol index of the first SSB in the system frame, that is, a 1st symbol index, where an index 0 corresponds to a 1st symbol of a 1st slot in the system frame, which specifically includes: If the subcarrier spacing is 15 kHz, the terminal device determines that the start symbol index of the first SSB is an $((S+1) \bmod Y)^{th}$ value in $\{2, 8\}+14\times n$, where n=0 or 1, or n=0, 1, 2, or 3; if the subcarrier spacing is 30 kHz, the terminal device determines that the start symbol index of the first SSB is an $((S+1) \bmod Y)^{th}$ value in $\{4, 8, 16, 20\}+28\times n$, where n=0, or n=0 or 1; if the subcarrier spacing is 30 kHz, the terminal device determines that the start symbol index of the first SSB is an $((S+1) \bmod Y)^{th}$ value in $\{2, 8\}+14\times n$, where n=0 or 1, or n=0, 1, 2, or 3; if the subcarrier spacing is 120 kHz, the terminal device determines that the start symbol index of the first SSB is an $((S+1) \bmod Y)^{th}$ value in $\{4, 8, 16, 20\}+28\times n$, where n=0, 1, 2, 3, 5, 6, 7, 8, 10, 11, 12, 13, 15, 16, 17, or 18; or if the subcarrier spacing is 240 kHz, the terminal device determines that the start symbol index of the first SSB is an $((S+1) \bmod Y)^{th}$ value in $\{8, 12, 16, 20, 32, 36, 40, 44\}+56\times n$, where n=0, 1, 2, 3, 5, 6, 7, or 8. S is the number of the first SSB, and mod represents a modulo operation.

For example, if a carrier frequency f is in FR2, the subcarrier spacing is 120 kHz, and a value of Y is 32, the terminal device determines that the start symbol index of the first SSB is a Y'th value in $\{4, 8, 16, 20\}+28\times n$, where n=0, 1, 2, 3, 5, 6, 7, or 8. For another example, if a carrier frequency f is in FR2, the subcarrier spacing is 120 kHz, and Y=8, the terminal device determines that the start symbol index of the first SSB is a Y'th value in $\{4, 8, 16, 20\}+28\times n$, where n=0 or 1; or the terminal device determines that the start symbol index of the first SSB is a Y'th value in $\{2, 8\}+14\times n$, where n=0, 1, 2, or 3.

Based on the foregoing technical solution, start symbol indexes of Y candidate sending positions included in a single system frame may reuse a definition in an existing protocol, so that an implementation of the solution can be simplified.

According to a second aspect, an SSB transmission method is provided. The method may be performed by a network device, or may be performed by a component (for example, a chip or a circuit) of the network device. This is not limited. For ease of description, the following uses an example in which the method is performed by the network device for description.

The method may include: The network device determines, based on a sending parameter, N candidate sending positions for transmitting N SSBs in one periodicity T1, where the N candidate sending positions are in at least two system frames, and the sending parameter includes one or more of the following parameters: a sweeping periodicity T3, a quantity Y of candidate sending positions included in each system frame, a time interval T2 between two consecutive system frames of candidate sending time positions included in each periodicity T1, and a quantity X of system frames of the candidate sending time positions included in each periodicity T1, where T1, Y, T3, and T2 are positive integers, and N and X are integers greater than 1; and the network device sends at least one of the N SSBs at at least one of the N candidate sending positions.

Based on the foregoing technical solution, in a definition of an existing standard, one system frame may include a maximum of four, eight, or 64 candidate sending positions. Therefore, when the network device determines the N candidate sending positions for transmitting the N SSBs in the one periodicity, and the N candidate sending positions are in the at least two system frames, N may be greater than 4, 8, or 64. For example, when the N candidate sending positions are in two system frames, and based on a definition in the existing standard, each system frame includes 64 candidate sending positions, N is equal to 128. Further, when the network device sends the SSB at the N candidate sending positions, the network device may send more SSBs, to help meet a sweeping requirement of single-satellite coverage.

With reference to the second aspect, in some implementations of the second aspect, the sending parameter includes the sweeping periodicity T3 and the time interval T2, and that the network device determines, based on a sending parameter, N candidate sending positions for transmitting SSBs in one periodicity T1 includes: The network device determines, based on the sweeping periodicity T3 and the time interval T2, the quantity X of system frames of the candidate sending positions included in each periodicity T1, where $X=\lceil T3/T2 \rceil$, and $\lceil \ \rceil$ represents rounding up; the network device determines, based on the periodicity T1 and the time interval T2, start time positions of the X system frames of the N candidate sending positions; and the network device determines start symbol indexes of the Y candidate sending positions included in each of the X system frames, where $Y=\lceil N/X \rceil$.

With reference to the second aspect, in some implementations of the second aspect, the sending parameter includes the sweeping periodicity T3 and the quantity Y of candidate sending positions included in each system frame, and that the network device determines, based on a sending parameter, N candidate sending positions for transmitting SSBs in one periodicity T1 includes: The network device determines, based on the quantity Y of candidate sending positions included in each system frame, the quantity X of system frames of the candidate sending positions included in each periodicity T1, where $X=\lceil N/Y \rceil$, and $\lceil \ \rceil$ represents rounding up; the network device determines the time interval T2 based on the sweeping periodicity T3 and the quantity X of system frames of the candidate sending positions included in each periodicity T1, where $1 \le T2 \le \lfloor T3/X \rfloor$, and $\lfloor \rfloor$ represents rounding down; the network device determines, based on the periodicity T1 and the time interval T2, start time positions of the X system frames of the N candidate sending positions; and the network device determines start symbol indexes of the Y candidate sending positions included in each of the X system frames.

With reference to the second aspect, in some implementations of the second aspect, the sending parameter includes the time interval T2 and the quantity Y of candidate sending positions included in each system frame, and that the network device determines, based on a sending parameter, N candidate sending positions for transmitting SSBs in one periodicity T1 includes: The network device determines, based on the quantity Y of candidate sending positions included in each system frame, the quantity X of system frames of the candidate sending positions included in each periodicity T1, where $X = \lceil N/Y \rceil$, and $\lceil \rceil$ represents rounding up; the network device determines, based on the periodicity T1 and the time interval T2, start time positions of the X system frames of the N candidate sending positions; and the network device determines start symbol indexes of the Y candidate sending positions included in each of the X system frames.

With reference to the second aspect, in some implementations of the second aspect, the sending parameter includes the sweeping periodicity T3 and the quantity X of system frames of the candidate sending positions included in each periodicity T1, and that the network device determines, based on the sending parameter, the candidate sending position for transmitting the SSB in the one periodicity T1 includes: The network device determines the time interval T2 based on the sweeping periodicity T3 and the quantity X of system frames of the candidate sending positions included in each periodicity T1, where $1 \le T2 \le \lfloor T3/X \rfloor$, and $\lfloor \rfloor$ represents rounding down; the network device determines, based on the periodicity T1 and the time interval T2, start time positions of the X system frames of the N candidate sending positions; and the network device determines start symbol indexes of the Y candidate sending positions included in each of the X system frames, where $Y = \lceil N/X \rceil$, and $\lceil \rceil$ represents rounding up.

With reference to the second aspect, in some implementations of the second aspect, the sending parameter includes the time interval T2 and the quantity X of system frames of the candidate sending positions included in each periodicity T1, and that the network device determines, based on a sending parameter, N candidate sending positions for transmitting SSBs in one periodicity T1 includes: The network device determines, based on the periodicity T1 and the time interval T2, start time positions of the X system frames of the N candidate sending positions; and the network device determines start symbol indexes of the Y candidate sending positions included in each of the X system frames, where $Y = \lceil N/X \rceil$, and $\lceil \rceil$ represents rounding up.

With reference to the second aspect, in some implementations of the second aspect, that the network device determines, based on the periodicity T1 and the time interval T2, start time positions of the X system frames of the N candidate sending positions includes: The network device determines, based on the periodicity T1 and the time interval T2, that start time positions of the X system frames of the N candidate sending positions in an m$^{th}$ periodicity T1 are respectively $\{(m-1)T1', (m-1)T1'+T2', (m-1)T1'+2T2', ..., (m-1)T1'+(X-1)T2'\}$, where m is a positive integer. If T1 represents duration of the periodicity, T1'=T1; or if T1 represents a quantity of system frames included in the periodicity, T1' = T$_{frame}$ · T1. If T2 represents duration of the time interval, T2' = T2; or if T2 represents a quantity of system frames included in the time interval, T2' = T$_{frame}$ · T2. T$_{frame}$ represents duration of one system frame.

With reference to the second aspect, in some implementations of the second aspect, that the network device determines the start symbol indexes, that is, 1$^{st}$ symbol indexes, of the Y candidate sending positions included in each of the X system frames in the system frame to which the Y candidate sending positions belong, where an index 0 corresponds to a 1$^{st}$ symbol of a 1$^{st}$ slot in the system frame specifically includes: If a subcarrier spacing is 15 kHz, the network device determines that the start symbol indexes of the Y candidate sending positions included in each system frame are Y values in $\{2, 8\}+14 \times n$, where n=0 or 1, or n=0, 1, 2, or 3; if a subcarrier spacing is 30 kHz, the network device determines that the start symbol indexes of the Y candidate sending positions included in each system frame are Y values in $\{4, 8, 16, 20\}+28 \times n$, where n=0, or n=0 or 1; if a subcarrier spacing is 30 kHz, the network device determines that the start symbol indexes of the Y candidate sending positions included in each system frame are Y values in $\{2, 8\}+14 \times n$, where n=0 or 1, or n=0, 1, 2, or 3; if a subcarrier spacing is 120 kHz, the network device determines that the start symbol indexes of the Y candidate sending positions included in each system frame are Y values in $\{4, 8, 16, 20\}+28 \times n$, where n=0, 1, 2, 3, 5, 6, 7, 8, 10, 11, 12, 13, 15, 16, 17, or 18; or if a subcarrier spacing is 240 kHz, the network device determines that the start symbol indexes of the Y candidate sending positions included in each system frame are Y values in $\{8, 12, 16, 20, 32, 36, 40, 44\}+56 \times n$, where n=0, 1, 2, 3, 5, 6, 7, or 8.

For example, if a carrier frequency f is in FR2, the subcarrier spacing is 120 kHz, and a value of Y is 32, the network device determines that the start symbol indexes of the Y candidate sending positions included in each system frame are $\{4, 8, 16, 20\}+28 \times n$, where n=0, 1, 2, 3, 5, 6, 7, or 8. For another example, if a carrier frequency f is in FR2, the subcarrier spacing is 120 kHz, and Y=8, the network device determines that the start symbol indexes of the Y candidate sending positions included in each system frame are {4, 8, 16, 20}+28×n, where n=0 or 1; or the network device determines that the start symbol indexes of the Y candidate sending positions included in each system frame are {2, 8}+14×n, where n=0, 1, 2, or 3.

Based on the foregoing technical solution, start symbol indexes of the Y candidate sending positions included in a single system frame may reuse a definition in an existing protocol, so that an implementation of the solution can be simplified.

With reference to the second aspect, in some implementations of the second aspect, a first SSB in the at least one SSB includes a PBCH, the PBCH includes SFN indicator bits and/or a half-frame indicator bit, and the SFN indicator bits and/or the half-frame indicator bit are/is used to determine a number of the first SSB.

Based on the foregoing technical solution, the SFN indicator bits may include 10 bits, and the half-frame indicator bit may include one bit. Therefore, when the number of the first SSB is indicated by the SFN indicator bits and/or the half-frame indicator bit, a maximum value of the number of the first SSB may be 2047 (that is, $2^{11}$-1). In other words, when the number of the first SSB ranges from 0 to 2047, the number of the first SSB may be indicated by the SFN indicator bits and/or the half-frame indicator bit, so that a terminal device may determine the number of the first SSB based on the SFN indicator bits, and determine a time position of the first SSB based on the number of the first SSB, to implement synchronization with the network device.

With reference to the second aspect, in some implementations of the second aspect, the PBCH includes the SFN indicator bits, and the number of the first SSB is represented by using $\lceil \log_2 N \rceil$ bits. When N>8, $\lceil \log_2 N \rceil - 3$ bits in the SFN indicator bits are used to determine the number of the first SSB, where $\lceil \ \rceil$ represents rounding up; when N>32, $\lceil \log_2 N \rceil - 5$ bits in the SFN indicator bits are used to determine the number of the first SSB; when N>64, $\lceil \log_2 N \rceil - 6$ bits in the SFN indicator bits are used to determine the number of the first SSB; or when N>128, $\lceil \log_2 N \rceil - 6$ bits or $\lceil \log_2 N \rceil - 7$ bits in the SFN indicator bits are used to determine the number of the first SSB.

For example, when N is greater than 8, the number of the first SSB may be indicated by a DMRS sequence index and the SFN indicator bits. The DMRS sequence index occupies three bits, and the SFN indicator bits occupy $\lceil \log_2 N \rceil - 3$ bits. In other words, the $\lceil \log_2 N \rceil - 3$ bits in the SFN indicator bits are used to determine the number of the first SSB.

For example, when N is greater than 32, the number of the first SSB may be indicated by an SSB index, a DMRS sequence index, and the SFN indicator bits. The SSB index occupies two bits, the DMRS sequence index occupies three bits, and the SFN indicator bits occupy $\lceil \log_2 N \rceil - 5$ bits. In other words, the $\lceil \log_2 N \rceil - 5$ bits in the SFN indicator bits are used to determine the number of the first SSB.

For example, when N is greater than 64, the number of the first SSB may be indicated by an SSB index, a DMRS sequence index, and the SFN indicator bits. The SSB index occupies three bits, the DMRS sequence index occupies three bits, and the SFN indicator bits occupy $\lceil \log_2 N \rceil$ -6 bits. In other words, the $\lceil \log_2 N \rceil - 6$ bits in the SFN indicator bits are used to determine the number of the first SSB.

For another example, when N is greater than 128, the number of the first SSB may be indicated by an SSB index, a DMRS sequence index, the SFN indicator bits, and the half-frame indicator bit. The SSB index occupies three bits, the DMRS sequence index occupies three bits, the half-frame indicator bit occupies one bit, and the SFN indicator bits occupy $\lceil \log_2 N \rceil - 7$ bits.

With reference to the second aspect, in some implementations of the second aspect, the $\lceil \log_2 N \rceil - 3$ bits in the SFN indicator bits are used to determine the number of the first SSB, and the method further includes: The network device determines, based on the time interval T2, that the $\lceil \log_2 N \rceil - 3$ bits in the SFN indicator bits are a ($\log_2 (T2'' \cdot 2)$)th bit to a ($\lceil \log_2 (N \cdot T2'' \cdot 2) \rceil - 4$)th bit in the SFN indicator bits; and the network device determines, based on the quantity Y of candidate sending positions included in each system frame, that the ($\log_2 (T2'' \cdot 2)$)th bit to the ($\lceil \log_2 (N \cdot T2'' \cdot 2) \rceil - 4$)th bit in the SFN indicator bits are a ($\log_2 (Y \cdot 2)$)th bit to a ($\lceil \log_2 (N \cdot Y \cdot 2) \rceil - 4$)th bit in the $\lceil \log_2 N \rceil$ bits.

With reference to the second aspect, in some implementations of the second aspect, the $\lceil \log_2 N \rceil - 5$ bits in the SFN indicator bits are used to determine the number of the first SSB, and the method further includes: The network device determines, based on the time interval T2, that the $\lceil \log_2 N \rceil - 5$ bits in the SFN indicator bits are a ( $\log_2$ (T2" · 2) )th bit to a ( $\lceil \log_2 (N \cdot T2" \cdot 2) \rceil - 6$ )th bit in the SFN indicator bits; and the network device determines, based on the quantity Y of candidate sending positions included in each system frame, that the ( $\log_2$ (T2" · 2) )th bit to the ( $\lceil \log_2 (N \cdot T2" \cdot 2) \rceil - 6$ )th bit in the SFN indicator bits are a ( $\log_2$ (Y · 2) )th bit to a ( $\lceil \log_2 (N \cdot Y \cdot 2) \rceil - 6$ )th bit in the $\lceil \log_2 N \rceil$ bits.

With reference to the second aspect, in some implementations of the second aspect, the $\lceil \log_2 N \rceil - 6$ bits in the SFN indicator bits are used to determine the number of the first SSB, and the method further includes: The network device determines, based on the time interval T2, that the $\lceil \log_2 N \rceil - 6$ bits in the SFN indicator bits are a ( $\log_2$ (T2" · 2) )th bit to a ( $\lceil \log_2 (N \cdot T2" \cdot 2) \rceil - 7$ )th bit in the SFN indicator bits; and the network device determines, based on the quantity Y of candidate sending positions included in each system frame, that the ( $\log_2$ (T2" · 2) )th bit to the ( $\lceil \log_2 (N \cdot T2" \cdot 2) \rceil - 7$ )th bit in the SFN indicator bits are a ( $\log_2$ (Y · 2) )th bit to a ( $\lceil \log_2 (N \cdot Y \cdot 2) \rceil - 7$ )th bit in the $\lceil \log_2 N \rceil$ bits.

With reference to the second aspect, in some implementations of the second aspect, the $\lceil \log_2 N \rceil - 7$ bits in the SFN indicator bits are used to determine the number of the first SSB, and the method further includes: The network device determines, based on the time interval T2, that the $\lceil \log_2 N \rceil - 7$ bits in the SFN indicator bits are a ( $\log_2$ (T2" · 2) )th bit to a ( $\lceil \log_2 (N \cdot T2" \cdot 2) \rceil - 8$ )th bit in the SFN indicator bits; and the network device determines, based on the quantity Y of candidate sending positions included in each system frame, that the ( $\log_2$ (T2" · 2) )th bit to the ( $\lceil \log_2 (N \cdot T2" \cdot 2) \rceil - 8$ )th bit in the SFN indicator bits are a (log$_2$ (Y · 2) )th bit to a ( $\lceil \log_2 (N \cdot Y \cdot 2) \rceil - 8$ )th bit in the $\lceil \log_2 N \rceil$ bits. T2" and Y are powers of 2. If T2 represents a quantity of system frames included in the time interval, T2" = T2. If T2 represents duration of the time interval, T2" = T2/T$_{frame}$. T$_{frame}$ represents duration of one system frame.

According to a third aspect, a communication apparatus is provided. The communication apparatus includes a transceiver unit and a processing unit. The transceiver unit is configured to perform a receiving or sending action of the terminal device in the first aspect and the optional implementations of the first aspect. The processing unit is configured to perform a determining action of the terminal device in the first aspect and the optional implementations of the first aspect.

According to a fourth aspect, a communication apparatus is provided. The communication apparatus includes a transceiver unit and a processing unit. The processing unit is configured to perform a receiving or sending action of the network device in the second aspect and the optional implementations of the second aspect. The processing unit is configured to perform a determining action of the network device in the second aspect and the optional implementations of the second aspect.

According to a fifth aspect, a communication apparatus is provided, including a processor. The processor is coupled to a memory, and may be configured to execute instructions in the memory, to implement the method in any one of the first aspect and the possible implementations of the first aspect. Optionally, the communication apparatus further includes the memory. Optionally, the communication apparatus further includes a communication interface, and the processor is coupled to the communication interface.

In an implementation, the communication apparatus is a terminal device. When the communication apparatus is the terminal device, the communication interface may be a transceiver or an input/output interface.

In another implementation, the communication apparatus is a chip disposed in the terminal device. When the communication apparatus is the chip disposed in the terminal device, the communication interface may be an input/output interface.

Optionally, the transceiver may be a transceiver circuit. Optionally, the input/output interface may be an input/output circuit.

According to a sixth aspect, a communication apparatus is provided, including a processor. The processor is coupled to a memory, and may be configured to execute instructions in the memory, to implement the method in any one of the second aspect and the possible implementations of the second aspect. Optionally, the communication apparatus further includes the memory. Optionally, the communication apparatus further includes a communication interface, and the processor is coupled to the communication interface.

In an implementation, the communication apparatus is a network device. When the communication apparatus is the network device, the communication interface may be a transceiver or an input/output interface.

In another implementation, the communication apparatus is a chip disposed in the network device. When the communication apparatus is the chip disposed in the network device, the communication interface may be an input/output interface.

According to a seventh aspect, a processor is provided, including an input circuit, an output circuit, and a processing circuit. The processing circuit is configured to receive a signal through the input circuit, and transmit a signal through the output circuit, so that the processor performs the method in any one of the possible implementations of the first aspect and the second aspect.

During specific implementation, the processor may be one or more chips, the input circuit may be an input pin, the output circuit may be an output pin, and the processing circuit may be a transistor, a gate circuit, a trigger, various logic circuits, or the like. For example, an input signal received by the input circuit may be received and input by a receiver, but this is not limited. For example, a signal output by the output circuit may be output to a transmitter and transmitted by the transmitter, but this is not limited. The input circuit and the output circuit may be a same circuit, and the circuit is used as the input circuit and the output circuit at different moments. Specific implementations of the processor and the various circuits are not limited in embodiments of this application.

According to an eighth aspect, a processing apparatus is provided, including a processor and a memory. The processor is configured to read instructions stored in the memory, receive a signal by using a receiver, and transmit a signal by using a transmitter, to perform the method in any one of the possible implementations of the first aspect and the second aspect.

Optionally, there are one or more processors, and there are one or more memories.

Optionally, the memory may be integrated with the processor, or the memory and the processor are disposed separately.

During specific implementation, the memory may be a non-transitory (non-transitory) memory such as a read-only memory (read-only memory, ROM). The memory and the processor may be integrated on a same chip, or may be separately disposed on different chips. A type of the memory and a manner of disposing the memory and the processor are not limited in embodiments of this application.

It should be understood that a related data exchange process, for example, sending an SSB, may be a process of outputting an SSB from the processor, and receiving an SSB may be a process of receiving an input SSB by the processor. Specifically, data output by the processor may be output to the transmitter, and input data received by the processor may be from the receiver. The transmitter and the receiver may be collectively referred to as a transceiver.

The processing apparatus in the eighth aspect may be one or more chips. The processor in the processing apparatus may be implemented by hardware, or may be implemented by software. When the processor is implemented by hardware, the processor may be a logic circuit, an integrated circuit, or the like. When the processor is implemented by software, the processor may be a general purpose processor, implemented by reading software code stored in the memory. The memory may be integrated into the processor, or may be located outside the processor and exist independently.

According to a ninth aspect, a computer program product is provided. The computer program product includes a computer program (which may also be referred to as code or instructions). When the computer program is run, a computer is enabled to perform the method in any one of the possible implementations of the first aspect and the second aspect.

According to a tenth aspect, a computer-readable storage medium is provided. The computer-readable storage medium stores a computer program (which may also be referred to as code or instructions). When the computer-readable storage medium runs on a computer, the method in any one of the possible implementations of the first aspect and the second aspect is performed.

According to an eleventh aspect, a communication system is provided, including the foregoing terminal device and the foregoing network device. The terminal device is configured to perform the method in any one of the first aspect and the possible implementations of the first aspect, and the network device is configured to perform the method in any one of the second aspect and the possible implementations of the second aspect.

BRIEF DESCRIPTION OF DRAWINGS

FIG. 1 is a diagram of a communication system to which a method according to an embodiment of this application is applicable;

FIG. 2 is a diagram of an application scenario according to an embodiment of this application;

FIG. 3 is a diagram of another application scenario according to an embodiment of this application;

FIG. 4 is a schematic flowchart of a method according to an embodiment of this application;

FIG. 5 is a diagram of N candidate sending positions determined according to a method according to an embodiment of this application;

FIG. 6 is a diagram of a communication apparatus according to an embodiment of this application;

FIG. 7 is a block diagram of a communication apparatus according to another embodiment of this application; and

FIG. 8 is a diagram of a chip system according to an embodiment of this application.

## DESCRIPTION OF EMBODIMENTS

The following describes the technical solutions in embodiments of this application with reference to the accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) system, a 6th generation (6th generation, 6G) system, a future communication system, or the like. The 5G mobile communication system in this application includes a non-standalone (non-standalone, NSA) 5G mobile communication system or a standalone (standalone, SA) 5G mobile communication system. The communication system may alternatively be a public land mobile network (public land mobile network, PLMN), a sidelink (sidelink, SL) communication system, a machine-to-machine (machine-to-machine, M2M) communication system, an internet of things (Internet of things, IoT) communication system, a vehicle-to-everything (vehicle-to-everything, V2X) communication system, an uncrewed aerial vehicle (uncrewed aerial vehicle, UAV) communication system, or another communication system.

A terminal device in embodiments of this application may be user equipment, an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future communication system, or the like. This is not limited in embodiments of this application.

A network device in embodiments of this application may be any device having a wireless transceiver function. The device includes but is not limited to: an evolved NodeB (evolved NodeB, eNB), a radio network controller (radio network controller, RNC), a NodeB (NodeB, NB), a home NodeB (for example, a home evolved NodeB or a home NodeB, HNB), a baseband unit (baseband unit, BBU), an access point (access point, AP), a wireless relay node, a wireless backhaul node, a transmission point (transmission point, TP) or a transmission and reception point (transmission and reception point, TRP), a gNB, or a transmission point (TRP or TP) in a wireless fidelity (wireless fidelity, Wi-Fi) system, one antenna panel or a group of antenna panels (including a plurality of antenna panels) of a base station in the 5G system, or may be a network node that constitutes a gNB or a transmission point, for example, a baseband unit (BBU), or a distributed unit (distributed unit, DU).

In some deployments, the network device in embodiments of this application may be a base station (for example, a gNB) in a RAN or the like. The base station may be a CU-DU split architecture. The RAN may be connected to a core network (for example, the core network may be a long term evolution (long term evolution, LTE) core network, or may be a 5G core network). It may be understood that the base station is divided into a CU and a DU from the perspective of a logical function. The CU and the DU may be physically separated or deployed together. A plurality of DUs may share one CU. One DU may alternatively be connected to a plurality of CUs. The CU and the DU may be connected through an interface, for example, an F1 interface. The CU and the DU may be obtained through division based on protocol layers of a wireless network.

For example, a possible division manner is that the CU is configured to perform functions of a radio resource control (radio resource control, RRC) layer, a service data adaptation protocol (service data adaptation protocol, SDAP) layer, and a packet data convergence protocol (packet data convergence protocol, PDCP) layer, and the DU is configured to perform functions of a radio link control (radio link control, RLC) layer, a media access control (media access control, MAC) layer, a physical (physical) layer, and the like.

It may be understood that, division into processing functions of the CU and the DU based on the protocol layers is merely an example, and there may be other division. For example, the CU or the DU may have functions of more protocol layers through division. For example, the CU or the DU may alternatively have some processing functions of the protocol layers through division.

The following describes the technical solutions in embodiments of this application with reference to the accompanying drawings in embodiments of this application. In descriptions of this application, unless otherwise specified, "/" indicates an "or" relationship between associated objects. For example, A/B may represent A or B. In this application, "and/or" describes only an association relationship between associated objects and represents that three relationships may exist. For example, A and/or B may indicate the following three cases: Only A exists, both A and B exist, and only B exists, where A and B may be singular or plural. In addition, in the descriptions of this application, unless otherwise specified, "a plurality of" means two or more than two. "At least one of the following items (pieces)" or a similar expression thereof means any combination of these items, including a single item (piece) or any combination of a plurality of items (pieces). For example, at least one (piece) of a, b, or c may represent: a, b, c, a and b, a and c, b and c, or a, b, and c, where a, b, and c may be singular or plural. In addition, in embodiments of this application, words such as "example" or "for example" are used to represent giving an example, an illustration, or a description. Any embodiment or design scheme described as an "example" or with "for example" in embodiments of this application should not be explained as being more preferred or having more advantages than another embodiment or design scheme. Exactly, use of the words such as "example" or "for example" is intended to present a related concept in a specific manner for ease of understanding.

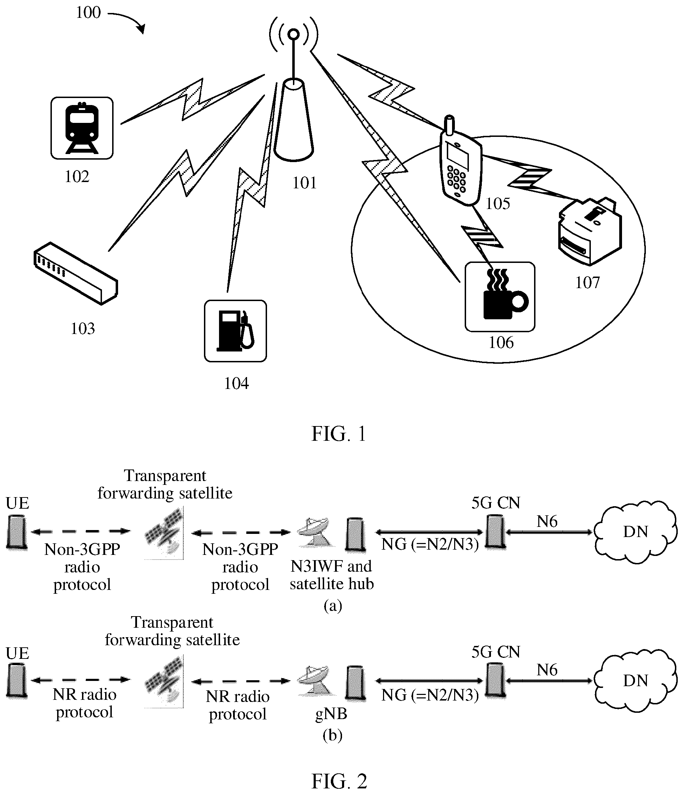

The following describes in detail a communication system to which the method provided in embodiments of this application is applicable with reference to FIG. 1.

FIG. 1 is a diagram of a communication system 100 to which a method according to an embodiment of this application is applicable. As shown in FIG. 1, the communication system 100 may include at least one network device, such as a network device 101 shown in FIG. 1. The communication system 100 may further include at least one terminal device, such as terminal devices 102 to 107 shown in FIG. 1. The terminal devices 102 to 107 may be mobile or fixed. The network device 101 may communicate with one or more of the terminal devices 102 to 107 through a radio link. Each network device may provide communication coverage for a specific geographic area, and may communicate with a terminal device located in the coverage area. For example, the network device may send downlink data to the terminal device. Therefore, the network device 101 and the terminal devices 102 to 107 in FIG. 1 form a communication system.

Optionally, the terminal devices may directly communicate with each other. For example, the terminal devices may directly communicate with each other by using an SL technology or the like. As shown in FIG. 1, the terminal device 105 and the terminal device 106, and the terminal device 105 and the terminal device 107 may directly communicate with each other by using the SL technology. The terminal device 106 and the terminal device 107 may separately or simultaneously communicate with the terminal device 105.

Alternatively, the terminal devices 105 to 107 may separately communicate with the network device 101. For example, the terminal devices 105 to 107 may directly communicate with the network device 101. For example, the terminal device 105 and the terminal device 106 in FIG. 1 may directly communicate with the network device 101, or indirectly communicate with the network device 101. For example, the terminal device 107 in FIG. 1 communicates with the network device 101 through the terminal device 105.

It should be understood that FIG. 1 shows an example of one network device, a plurality of terminal devices, and communication links between communication devices. Optionally, the communication system 100 may include a plurality of network devices, and coverage of each network device may include another quantity of terminal devices, for example, more or fewer terminal devices. This is not limited in this application.

Optionally, a plurality of antennas may be configured for the network device 101 and the terminal devices 102 to 107 in FIG. 1. The plurality of antennas may include at least one transmit antenna configured to send a signal and at least one receive antenna configured to receive a signal. In addition, the communication devices may additionally include a transmitter chain and a receiver chain. A person of ordinary skill in the art may understand that the transmitter chain and the receiver chain each may include a plurality of components (for example, a processor, a modulator, a multiplexer, a demodulator, a demultiplexer, and an antenna) related to signal sending and receiving.

Optionally, the wireless communication system 100 may further include another network entity such as a network controller and a mobility management entity. This is not limited in embodiments of this application.

FIG. 2 is a diagram of an application scenario according to an embodiment of this application. The scenario may be referred to as an "architecture with a transparent satellite (RAN architecture with a transparent satellite)" or referred to as a bentpipe (bentpipe) mode. As shown in (a) of FIG. 2, communication between UE and a satellite and communication between a satellite and a non-3rd generation partnership project (3rd generation partnership project) interworking function (non-3GPP interworking function, N3IWF) and a satellite hub (satellite hub) are performed by using a non-3GPP radio protocol (non-3GPP radio protocol). The N3IWF and the satellite hub may be connected to a 5G core network (5G core network, 5G CN) through a next generation (next generation, NG) interface (N2/N3), and the 5G CN is connected to a data network (data network, DN) through an N6 interface. As shown in (b) of FIG. 2, communication between the UE and the satellite and communication between the satellite and a gNB may be performed by using an NR protocol. In the scenario, the satellite is configured to forward a signal through frequency conversion.

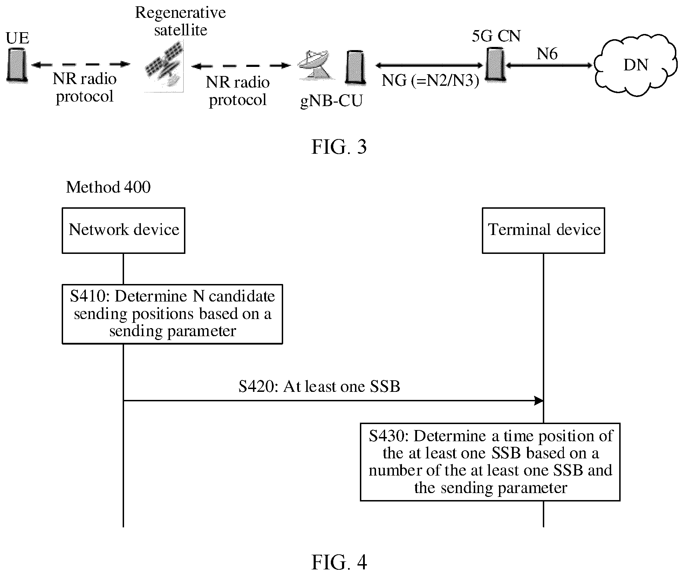

FIG. 3 is a diagram of another application scenario according to an embodiment of this application. The scenario may be referred to as a regenerative (regenerative) mode. As shown in FIG. 3, in the scenario, a satellite is a DU (an NG-RAN with a regenerative satellite based on a gNB-DU), communication between UE and the satellite may be performed by using an NR protocol, and the satellite is connected to a gNB-CU through an F1 interface.

It may be understood that this embodiment of this application may be further applied to a scenario in which the satellite is used as integrated access and backhaul (integrated access and backhaul, IAB).

Satellite communication has a feature of an extremely wide coverage area of a single satellite, and the coverage area of the single satellite is closely related to a sweeping angle of the satellite. A low Earth orbit satellite communication system with an orbital height of 500 km is used as an example. It is assumed that a sweeping angle of a phased array antenna is $\pm30° \times \pm45°$, where $\pm45°$ is a sweeping angle in a satellite motion direction, and $\pm30°$ is a sweeping angle in a direction perpendicular to the satellite motion direction. It is assumed that coverage of the satellite on the ground is calculated based on rectangular coverage. If a long side of the rectangular coverage in the satellite motion direction is approximately 1000 km, and a short side of the rectangular coverage in the direction perpendicular to the satellite motion direction is approximately 660 km, a total coverage area of the satellite is 660* 1000=660,000 square kilometers. Similar to a terrestrial network, a satellite base station may sweep the coverage area of the satellite by using a control beam, for access by a user. However, in consideration of a hardware limitation of the satellite and a link budget limitation of user access, a coverage area of a single beam is limited. For example, it is considered that the satellite uses a single channel to perform beam sweeping, and an array scale is 40*40. For a beam of a sub-satellite point, a beam width that can meet the access is approximately 4.6 degrees. In this case, a coverage area of a single beam that is of the sub-satellite point and that can meet the access is approximately 1256 square kilometers, and a quantity of beams that meet a requirement of single-satellite coverage exceeds 530. For a beam of an edge point, a beam width that can meet the access is approximately 1.4 degrees. In this case, a coverage area of a single beam that is of the edge point and that can meet the access is approximately 841 square kilometers, and a quantity of beams that meet the requirement of the single-satellite coverage is greater than 790. According to the foregoing analysis, when the total coverage area of the satellite is 670,000 square kilometers, seamless coverage is calculated based on unequal area coverage of beams. In this case, 530 to 790 beams are needed to implement continuous random access within the single-satellite coverage.

In an existing 3GPP protocol, a control beam sweeping process is performed to complete sending of synchronization signal/physical broadcast channel blocks (synchronization signal/physical broadcast channel blocks, SSBs) corresponding to different beams. An FR1 frequency band supports a maximum of eight beams in a single cell, in other words, supports a maximum of eight SSBs in a single cell, and the eight beams are in one-to-one correspondence with the eight SSBs. An FR2 frequency band supports a maximum of 64 beams in a single cell, in other words, supports a maximum of 64 SSBs in a single cell, and the 64 beams are in one-to-one correspondence with the 64 SSBs. The synchronization signal/physical broadcast channel block may also be referred to as a synchronization signal block. The SSB is sent at a fixed time domain position. SSB time domain position patterns supported by the FR1 frequency band are a case A (Case A), a case B (Case B), and a case C (Case C), and SSB time domain position patterns supported by the FR2 frequency band are a case D (Case D) and a case E (Case E). In an NR system, the SSB is sent in a specific periodicity, and a sending moment of the SSB is in a unit of a half-frame (duration is 5 ms). In one half-frame, a gNB may send the SSB at a plurality of candidate positions. Table 1 shows SSB patterns (patterns) corresponding to different subcarrier spacings (subcarrier spacings, SCSs) in each SSB sweeping periodicity.

Table 1

| Pattern | SCS (kHz) | 1st symbol position of an SSB | f≤3 GHz | | f is in FR1 and f>3 GHz | | f is in FR2 | |
|---|---|---|---|---|---|---|---|---|
| | | | n | Maximum quantity of SSBs | n | Maximum quantity of SSBs | n | Maximum quantity of SSBs |
| Case A | 15 | {2, 8}+14×n | 0, 1 | 4 | 0, 1, 2, 3 | 8 | | |
| Case B | 30 | {4, 8, 16, 20} +28×n | 0 | 4 | 0, 1 | 8 | | |
| Case C | 30 | {2, 8}+14×n | 0, 1 | 4 | 0, 1, 2, 3 | 8 | | |
| Case D | 120 | {4, 8, 16, 20} +28×n | | | | | 0, 1, 2, 3, 5, 6, 7, 8, 10, 11, 12, 13, 15, 16, 17, 18 | 64 |

(continued)

| Pattern | SCS (kHz) | 1st symbol position of an SSB | f≤3 GHz | | f is in FR1 and f>3 GHz | | f is in FR2 | |
|---|---|---|---|---|---|---|---|---|
| | | | n | Maximum quantity of SSBs | n | Maximum quantity of SSBs | n | Maximum quantity of SSBs |
| Case E | 240 | {8, 12, 16, 20, 32, 36, 40, 44}+56×n | | | | | 0, 1, 2, 3, 5, 6, 7, 8 | 64 |

As described above, in satellite communication, because the coverage area of the single satellite is extremely large, a coverage area of a single beam of a sweeping beam is small due to limitations of a hardware condition, a link budget, and the like. Therefore, more sweeping beams are needed to meet the single-satellite coverage, and more sweeping beams correspond to more SSBs. However, the existing 3GPP supports a maximum of 64 beams in a single cell, which is far less than a quantity of sweeping beams needed for the single-satellite coverage.

In view of this, embodiments of this application provide an SSB transmission method, to meet a transmission requirement of more SSBs.

For ease of understanding, the following first describes a frame structure in embodiments of this application.

The frame structure is a structure showing division of a time resource (also referred to as a time domain resource) for signal transmission. In wireless communication, commonly-used time units in the frame structure are a radio frame (also referred to as a system frame (system frame)), a half-frame (half-frame), a subframe (subframe), a slot (slot), and a symbol (symbol) in descending order. In an LTE system and a 5G system, duration of one radio frame is 10 ms, one radio frame includes two half-frames, and duration of each half-frame is 5 ms. One radio frame includes 10 subframes, and duration of one subframe is 1 ms. A quantity of slots included in one subframe is related to an SCS of the radio frame. For example, if the SCS=15 kHz, one subframe includes one slot, and duration of one slot is 1 ms; if the SCS=30 kHz, one subframe includes two slots, and duration of one slot is 0.5 ms; if the SCS=60 kHz, one subframe includes four slots, and duration of one slot is 0.25 ms; if the SCS=120 kHz, one subframe includes eight slots, and duration of one slot is 0.125 ms; or if the SCS=240 kHz, one slot includes 16 slots, and duration of one slot is 0.0625 ms.

Symbol: For a normal cyclic prefix (cyclic prefix, CP), one slot includes 14 symbols, and for an extended CP, one slot includes 12 symbols.

It should be understood that, in a future communication system, a definition of the frame structure may be different from that in the foregoing descriptions. This is not limited in this application.

Without loss of generality, the following describes in detail the SSB transmission method provided in embodiments of this application by using interaction between a network device and a terminal device as an example.

It should be understood that, merely for ease of understanding and description in embodiments of this application, the interaction between the network device and the terminal device is used as an example to describe in detail the method provided in embodiments of this application. However, this should not constitute any limitation on an execution body of the method provided in this application. For example, the terminal device shown in the following embodiments may be replaced with a component (for example, a circuit, a chip, a chip system, or another functional module that can invoke and execute a program) disposed in the terminal device; and the network device shown in the following embodiments may be replaced with a component (for example, a circuit, a chip, a chip system, or another functional module that can invoke and execute a program) disposed in the network device, provided that SSB transmission can be implemented according to the method provided in embodiments of this application by running a program that records code of the method provided in embodiments of this application.

It should be further noted that, in embodiments of this application, for ease of description, when numbering is involved, numbering may be performed consecutively starting from 0. For example, numbers of N SSBs are 0 to N-1, numbers of N candidate sending positions are 0 to N-1, and system frame numbers of X system frames are 0 to X-1. Certainly, a specific implementation is not limited thereto. For example, numbering may alternatively be performed consecutively starting from 1. For example, numbers of N SSBs are 1 to N, numbers of N candidate sending positions are 0 to N, and system frame numbers of X system frames are 1 to X. For brevity, examples are not listed one by one herein.

FIG. 4 is a schematic flowchart of an SSB transmission method 400 according to an embodiment of this application. The method 400 may include the following steps.

S410: A network device determines N candidate sending positions based on a sending parameter.

The N candidate sending positions are for transmitting N SSBs in one periodicity T1. In other words, the N candidate sending positions are N candidate resources for transmitting the N SSBs in one periodicity T1. The N candidate sending positions are in one-to-one correspondence with the N SSBs. To be specific, each of the N candidate sending positions is for transmitting an SSB corresponding to each candidate sending position in one periodicity T1. Any two of the N SSBs have at least different numbers. N is an integer greater than 1. For example, N is an integer greater than 64. T1 is a positive integer.

The periodicity T1 is a transmission periodicity of the N SSBs. In each periodicity T1, the network device may send one or more of the N SSBs. T1 may represent duration of the periodicity, or may represent a quantity of system frames included in the periodicity. This is not limited in embodiments of this application. It is assumed that the duration of the periodicity is 640 ms and an SCS=30 kHz. In this case, T1 may be equal to 640, or T1 may be equal to 64.

The sending parameter includes one or more of the following parameters: a sweeping periodicity T3, a quantity Y of candidate sending positions included in each system frame, a time interval T2 between two consecutive system frames of candidate sending positions included in each periodicity T1, and a quantity X of system frames of the candidate sending positions included in each periodicity T1. Y and T2 are positive integers, and X is an integer greater than 1.

The sweeping periodicity T3 is a sweeping periodicity used by a terminal device to receive the SSB from the network device. T3 may represent duration of the sweeping periodicity, or may represent a quantity of system frames included in the sweeping periodicity. This is not limited in embodiments of this application. It is assumed that the duration of the sweeping periodicity is 640 ms and the SCS=30 kHz. In this case, T3 may be equal to 640, or T3 may be equal to 64. It should be understood that the periodicity T1 is greater than or equal to the sweeping periodicity T3.

The quantity Y of candidate sending positions included in each system frame is a quantity of candidate sending positions included in each of the X system frames of the N candidate sending positions. The Y candidate sending positions included in each system frame may be referred to as a candidate sending position group. Correspondingly, Y SSBs corresponding to the Y candidate sending positions included in each system frame may be referred to as an SSB group (SSB group). For example, Y candidate sending positions included in each different system frame in the X system frames are in a fixed symbol of a fixed slot of the system frames. For example, if a carrier frequency f is in FR1, 6 GHz>f>3 GHz, the SCS=30 kHz, and each of the X system frames includes eight candidate sending positions, the eight candidate sending positions included in each system frame are fixed in the first four slots of a first half-frame of the system frame to which the candidate sending positions belong, or are fixed in the first four slots of a second half-frame of the system frame to which the candidate sending positions belong for sending. Therefore, each slot includes two candidate sending positions, the two candidate sending positions are separately in four symbols in each slot, and two candidate sending positions included in each slot occupy eight symbols in total.

A value of the quantity Y of candidate sending positions may be 4, 8, 16, 32, 64, or the like. The carrier frequency f is in a low frequency band (for example, FR1), and the value of Y may be 4 or 8. The carrier frequency f is in a high frequency band (for example, FR2), and the value of Y may be 8, 16, 32, 64, or the like. For example, the value of the quantity Y of candidate sending positions may reuse a definition in an existing standard. For example, the value of the quantity Y of candidate sending positions is shown in Table 2. For example, the carrier frequency f is in FR1, f>3 GHz, and the SCS=30 kHz. It can be learned from Table 1 that a maximum quantity of SSBs that can be sent in one system frame is equal to 8. Therefore, the value of Y may be defined as a positive integer less than or equal to 8.

Table 2

| SCS (kHz) | f≤3 GHz | f is in FR1 and f>3 GHz | f is in FR2 |
|---|---|---|---|
| 15 | Y≤4 | Y≤8 | |
| 30 | Y≤4 | Y≤8 | |
| 120 | | | Y≤64 |
| 240 | | | Y≤64 |

The time interval T2 between the two consecutive system frames of the candidate sending positions included in each periodicity T1 is a time interval between any two consecutive system frames in the X system frames of the N candidate sending positions. T2 may represent duration of the time interval, or may represent a quantity of system frames included in the time interval. It is assumed that the duration of the time interval is 20 ms and the SCS=30 kHz. In this case, T2 may be equal to 20, or T2 may be equal to 2.

The quantity X of system frames of the candidate sending positions included in each periodicity T1 is a quantity of system frames of the N candidate sending positions. The X system frames of the N candidate sending positions meet any one of the following conditions: The X system frames are any X consecutive system frames; an interval between two adjacent system frames is fixed and a system frame number is an even number; or an interval between two adjacent system frames is fixed and a system frame number is an odd number.

In an implementation 1, if the sending parameter includes the sweeping periodicity T3 and the time interval T2, that the network device determines the N candidate sending positions based on the sending parameter includes: The network device determines, based on the sweeping periodicity T3 and the time interval T2, the quantity X of system frames of the candidate sending positions included in each periodicity T1, where $X = \lceil T3/T2 \rceil$, and $\lceil \rceil$ represents rounding up; the network device determines, based on the periodicity T1 and the time interval T2, start time positions of the X system frames of the N candidate sending positions; and the network device determines start symbol indexes of the Y candidate sending positions included in each of the X system frames, where $Y = \lceil N/X \rceil$.

It should be noted that, when units of T3 and T2 are unified, the network device may determine X based on X= [T3/T2] . If units of T3 and T2 are not unified, after converting the units of T3 and T2 into a unified unit, the network device determines X based on $X = \lceil T3/T2 \rceil$. For example, if the unit of T3 is ms, and the unit of T2 is a quantity of system frames, the network device may convert T2 into a value in a unit of ms. For example, if T2=1, the network device may convert T2 into 10 ms.

After determining the quantity X of system frames of the N candidate sending positions, the network device may determine the start time position of each of the X system frames.

For example, if a start time position of a 1st system frame in the X system frames is the same as a start time position of the periodicity T1, in an mth periodicity T1, start time positions of the X system frames determined by the network device are respectively {(m-1)T1',(m-1)T1'+T2',(m-1)T1'+2T2',...,(m-1)T1'+(X-1)T2'}. If T1 represents the duration of the periodicity, T1'= T1. If T1 represents the quantity of system frames included in the periodicity, T1' = $T_{frame}$ · T1. $T_{frame}$ represents duration of one system frame. For example, $T_{frame}$ =10 ms. Similarly, if T2 represents the duration of the interval between any two consecutive system frames in the X system frames, T2' = T2. If T2 represents the quantity of system frames in the interval between any two consecutive system frames in the X system frames, T2' = $T_{frame}$ · T2

For another example, if an offset between the start time position of the 1st system frame in the X system frames and the start time position of the periodicity T1 is Δt, in the mth periodicity T1, the start time positions of the X system frames determined by the network device are respectively

$$\{\Delta t+(m-1)T1', \Delta t+(m-1)T1'+T2', \Delta t+(m-1)T1'+2T2',...,\Delta t+(m-1)T1'+(X-1)T2'\}.$$

Optionally, after determining the quantity X of system frames of the N candidate sending positions, the network device may determine a system frame number (system frame number, SFN) of each of the X system frames.

For example, if the 1st system frame in the X system frames is the same as a 1st system frame in the periodicity T1, in the mth periodicity T1, system frame numbers of the X system frames determined by the network device are respectively {(m-1)T1",(m-1)T1"+T2",(m-1)T1"+2T2",...,(m-1)T1"+(X-1)T2"}. If T1 represents the duration of the periodicity, T1" = T1/$T_{frame}$. If T1 represents the quantity of system frames included in the periodicity, T1" = T1. Similarly, if T2 represents the duration of the interval between any two consecutive system frames in the X system frames, T2" = T2/$T_{frame}$. If T2 represents the quantity of system frames in the interval between any two consecutive system frames in the X system frames, T2" = T2.

For another example, if there are t system frames between the 1st system frame in the X system frames and the 1st system frame in the periodicity T1, in the mth periodicity T1, the system frame numbers of the X system frames determined by the network device are respectively

$$\{t+(m-1)T1", t+(m-1)T1"+T2", t+(m-1)T1"+2T2",...,t+(m-1)T1"+(X-1)T2"\}.$$

It should be noted that, in this embodiment of this application, an example in which the system frame numbers are numbered starting from 0 is used for description. However, in this embodiment of this application, the system frame number is not necessarily limited to being numbered starting from 0. For example, the system frame number may be numbered starting from 1. If the system frame numbers are numbered starting from 1, in the mth periodicity T1, the system frame numbers of the X system frames determined by the network device are respectively

$$\{(m-1)T1"+1,(m-1)T1"+T2"+1,(m-1)T1"+2T2"+1,...,(m-1)T1"+(X-1)T2"+1\}.$$

After the network device determines the start time position or the system frame number of each of the X system frames, the network device determines the start symbol indexes, namely, 1st symbol indexes, of the Y candidate sending positions included in each of the X system frames in the system frame to which the Y candidate sending positions belong. An index 0 corresponds to a 1st symbol of a 1st slot in the system frame. In this way, the network device may determine the N candidate sending positions.

For example, the start symbol indexes of the Y candidate sending positions included in each system frame may be defined in an existing standard or redefined.

For example, if the carrier frequency f≤3 GHz and the SCS=15 kHz, the network device determines that the start symbol indexes of the Y candidate sending positions included in each system frame are Y values in {2, 8}+14×n, where n=0 or 1.

Alternatively, if the carrier frequency f is in FR1, f>3 GHz, and the SCS=15 kHz, the network device determines that the start symbol indexes of the Y candidate sending positions included in each system frame are Y values in {2, 8}+14×n, where n=0, 1, 2, or 3.

Alternatively, if the carrier frequency f≤3 GHz and the SCS=30 kHz, the network device determines that the start symbol indexes of the Y candidate sending positions included in each system frame are Y values in {4, 8, 16, 20}+28×n, where n=0; or the network device determines that the start symbol indexes of the Y candidate sending positions included in each system frame are Y values in {2, 8}+14×n, where n=0 or 1.

Alternatively, if the carrier frequency f is in FR1, f>3 GHz, and the SCS=30 kHz, the network device determines that the start symbol indexes of the Y candidate sending positions included in each system frame are Y values in {4, 8, 16, 20}+28×n, where n=0 or 1; or the network device determines that the start symbol indexes of the Y candidate sending positions included in each system frame are Y values in {2, 8}+14×n, where n=0, 1, 2, or 3.

Alternatively, if the carrier frequency f is in FR2 and the SCS=120 kHz, the network device determines that the start symbol indexes of the Y candidate sending positions included in each system frame are Y values in {4, 8, 16, 20}+28×n, where n=0, 1, 2, 3, 5, 6, 7, 8, 10, 11, 12, 13, 15, 16, 17, or 18. For example, if the value of Y is 32, the start symbol indexes of the Y candidate sending positions included in each system frame are {4, 8, 16, 20}+28×n, where n=0, 1, 2, 3, 5, 6, 7, or 8. For another example, if Y=8, the network device determines that the start symbol indexes of the Y candidate sending positions included in each system frame are Y values in {4, 8, 16, 20}+28×n, where n=0 or 1; or the network device determines that the start symbol indexes of the Y candidate sending positions included in each system frame are Y values in {2, 8}+14×n, where n=0, 1, 2, or 3.

Alternatively, if the carrier frequency f is in FR2 and the SCS=240 kHz, the network device determines that the start symbol indexes of the Y candidate sending positions included in each system frame are Y values in {8, 12, 16, 20, 32, 36, 40, 44}+56×n, where n=0, 1, 2, 3, 5, 6, 7, or 8.

For example, it is assumed that N=256, T3=640 ms, and T2=20 ms. In this case, the network device may determine, based on $X = \lceil T3/T2 \rceil$, that X is equal to 32, and determine that Y is equal to 8.

If the carrier frequency is that 3 GHz≤f≤6 GHz, the SCS=30 kHz, and the 1st system frame in the X system frames is the same as the 1st system frame in the periodicity T1, in a 1st periodicity, a system frame number SFN_SSB of an $x$th system frame in the X system frames satisfies a formula (1), that is, the system frame of the candidate sending position is an even-numbered frame, 1≤x≤X, and the start symbol indexes of the eight candidate sending positions included in each of the X system frames satisfy a formula (2).

$$SFN\_SSB \bmod(T3/T2) = \{0, 2, 4, ..., (2T3/T2) - 2\} \quad \text{Formula (1)}$$

$$\{2, 8\}+14 \times n, \ n=0, 1, 2, 3 \quad \text{Formula (2)}$$

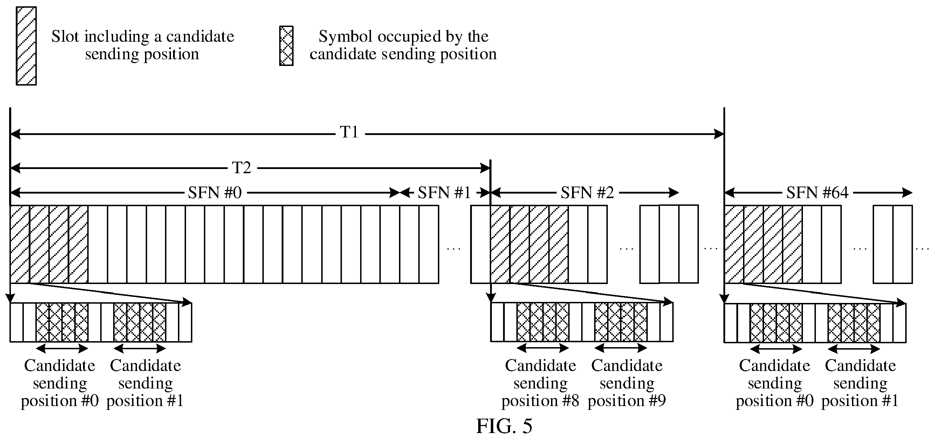

For example, each candidate sending position occupies four symbols. FIG. 5 is a diagram of the N candidate sending positions determined by the network device. As shown in FIG. 5, in the 1st periodicity, the system frame number of the 1st system frame in the X system frames is 0, and the system frame whose system frame number is 0 may be represented by using an SFN #0. According to the formula (2), eight candidate sending positions included in the SFN #0 are in the first four slots of the SFN #0, and two candidate sending positions included in a 1st slot are respectively denoted as a candidate sending position #0 and a candidate sending position #1. The candidate sending position #0 occupies a symbol #2 to a symbol #5, and the candidate sending position #1 occupies a symbol #8 to a symbol #11. The candidate sending position #0 is for transmitting a 1st SSB in the N SSBs, and the candidate sending position #1 is for transmitting a 2nd SSB in the N SSBs. It may be understood that a 2nd slot to a 4th slot of the SFN #0 further include six candidate sending positions. The six candidate sending positions may be respectively denoted as a candidate sending position #2 to a candidate sending position #7 (not shown in the figure). Because T2 is equal to 20 ms, a system frame number of a 2nd system frame in the X system frames is 2, and the system frame whose system frame number is 2 may be represented by using an SFN #2. Similarly, eight candidate sending positions included in the SFN #2 are in the first four slots of the SFN #2, and two candidate sending positions included in a 1st slot are respectively denoted as a candidate sending position #8 and a candidate sending position #9. The candidate sending position #8 occupies a symbol #2 to a symbol #5, and the candidate sending position #9 occupies a symbol #8 to a symbol #11. The candidate sending position #8 is for transmitting a 9th SSB in the N SSBs, and the candidate sending position #9 is for transmitting a 10th SSB in the N SSBs. By analogy, the network device may determine the N candidate sending positions.

For example, it is assumed that N=128, T3=320 ms, and T2=20 ms. In this case, the network device may determine, based on $X = \lceil T3/T2 \rceil$ , that X is equal to 16, and determine that Y is equal to 8.

If the carrier frequency is that 3 GHz≤f≤6 GHz, the SCS=30 kHz, and the 1st system frame in the X system frames is the same as the 1st system frame in the periodicity T1, in the 1st periodicity, the system frame number SFN_SSB of the $x$th system frame in the X system frames satisfies the foregoing formula (1), that is, the system frame of the candidate sending position is an even-numbered frame, 1≤x≤X, and the start symbol indexes of the eight candidate sending positions included in each of the X system frames satisfy the foregoing formula (2). For example, it is assumed that N=64, T3=160 ms, and T2=20 ms. In this case, the network device may determine, based on $X = \lceil T3/T2 \rceil$ , that X is equal to 8, and determine that Y is equal to 8.

If the carrier frequency is that 3 GHz≤f≤6 GHz, the SCS=30 kHz, and the 1st system frame in the X system frames is the same as the 1st system frame in the periodicity T1, in the 1st periodicity, the system frame number SFN_SSB of the $x$th system frame in the X system frames satisfies the foregoing formula (1), that is, the system frame of the candidate sending position is an even-numbered frame, 1≤x≤X, and the start symbol indexes of the eight candidate sending positions included in each of the X system frames satisfy the foregoing formula (2).

In an implementation 2, if the sending parameter includes the sweeping periodicity T3 and the quantity Y of candidate sending positions included in each system frame, that the network device determines the N candidate sending positions based on the sending parameter includes: The network device determines, based on the quantity Y of candidate sending positions, the quantity X of system frames of the candidate sending positions included in each periodicity, where $X = \lceil N/Y \rceil$ ; the network device determines, based on the sweeping periodicity T3 and the quantity X of system frames, the time interval T2 between any two consecutive system frames in the X system frames; the network device determines, based on the periodicity T1 and the time interval T2, start time positions of the X system frames of the N candidate sending positions; and the network device determines start symbol indexes of the Y candidate sending positions included in each of the X system frames.

After determining the quantity X of system frames, the network device may determine, based on the sweeping periodicity T3 and the quantity X of system frames, the time interval T2 between any two consecutive system frames in the X system frames, where $1 \leq T2 \leq \lfloor T3''/X \rfloor$ , and $\lfloor \ \rfloor$ represents rounding down. If T3 represents duration of the sweeping periodicity, $T3'' = T3/T_{frame}$. If T3 represents a quantity of system frames included in the sweeping periodicity, $T3'' = T3$. For example, if the sweeping periodicity T3 is 640 ms, the SCS=30 kHz, and X=32, $T3'' = T3/T_{frame} = 64$, and T2=1 or T2=2. It may be understood that, in the implementation 2, the time interval T2 determined by the network device represents a quantity of system frames between any two consecutive system frames in the X system frames.

For a manner in which the network device determines, based on the periodicity T1 and the time interval T2, the start time position of each of the X system frames, and a manner in which the network device determines the start symbol indexes of the Y candidate sending positions included in each system frame in the system frame to which the Y candidate sending positions belong, refer to the descriptions in the foregoing implementation 1.

In an implementation 3, if the sending parameter includes the time interval T2 and the quantity Y of candidate sending positions included in each system frame, that the network device determines the N candidate sending positions based on the sending parameter includes: The network device determines, based on the quantity Y of candidate sending positions, the quantity X of system frames of the candidate sending positions included in each periodicity, where $X = \lceil N/Y \rceil$ ; the network device determines, based on the periodicity T1 and the time interval T2, start time positions of the X system frames of the N candidate sending positions; and the network device determines start symbol indexes of the Y candidate sending positions included in each of the X system frames.

For a manner in which the network device determines, based on the periodicity T1 and the time interval T2, the start time position of each of the X system frames, and a manner in which the network device determines the start symbol indexes of the Y candidate sending positions included in each system frame in the system frame to which the Y candidate sending positions belong, refer to the descriptions in the foregoing implementation 1.

In an implementation 4, if the sending parameter includes the sweeping periodicity T3 and the quantity X of system frames of the candidate sending positions included in each periodicity, that the network device determines the N candidate sending positions based on the sending parameter includes: The network device determines, based on the sweeping periodicity T3 and the quantity X of system frames, the time interval T2 between any two consecutive system frames in the X system frames of the N candidate sending positions, where $1 \leq T2 \leq \lfloor T3''/X \rfloor$ ; the network device determines, based on the periodicity T1 and the time interval T2, start time positions of the X system frames of the N candidate sending positions; and the network device determines start symbol indexes of the Y candidate sending positions included in each of the X system frames, where $Y=\lceil N/X \rceil$.

For a manner in which the network device determines, based on the periodicity T1 and the time interval T2, the start time position of each of the X system frames, and a manner in which the network device determines the start symbol indexes of the Y candidate sending positions included in each system frame in the system frame to which the Y candidate sending positions belong, refer to the descriptions in the foregoing implementation 1.

In an implementation 5, if the sending parameter includes the time interval T2 and the quantity X of system frames of the candidate sending positions included in each periodicity, that the network device determines the N candidate sending positions based on the sending parameter includes: The network device determines, based on the periodicity T1 and the time interval T2, start time positions of the X system frames of the N candidate sending positions; and the network device determines start symbol indexes of the Y candidate sending positions included in each of the X system frames, where $Y=\lceil N/X \rceil$.

For a manner in which the network device determines, based on the periodicity T1 and the time interval T2, the start time position of each of the X system frames, and a manner in which the network device determines the start symbol indexes of the Y candidate sending positions included in each system frame in the system frame to which the Y candidate sending positions belong, refer to the descriptions in the foregoing implementation 1.

It should be noted that, in this embodiment of this application, the foregoing implementation 1 to implementation 5 are merely used as examples to describe a manner in which the network device determines the N candidate sending positions based on the sending parameter. In a specific implementation, the sending parameter may include one or more of the foregoing parameters. When the sending parameter includes different parameters, manners in which the network device determines the N candidate sending positions based on the sending parameter are also different.

It should be further noted that, before S410, the network device may determine, based on information about a frequency band of a to-be-sent SSB, the N candidate sending positions in the manner described in S410. For example, the manner of determining the N candidate sending positions described in S410 corresponds to information about a specific frequency band (for example, FR2). If the information about the frequency band of the to-be-sent SSB is the information about the specific frequency band, the network device determines to determine the N candidate sending positions in the manner described in S410.

S420: The network device sends at least one SSB to the terminal device. Correspondingly, in S420, the terminal device receives the at least one SSB from the network device.

After determining the N candidate sending positions based on the sending parameter, the network device may send at least one of the N SSBs based on at least one of the N candidate sending positions. It may be understood that the at least one candidate sending position corresponds to the at least one SSB. For example, if the network device sends the 2nd SSB in the N SSBs, the network device sends the 2nd SSB based on a 2nd candidate sending position in the N candidate sending positions. As shown in FIG. 5, in the 1st periodicity, the network device sends the 2nd SSB on the symbol #8 to the symbol #11 of the 1st slot of the SFN #0.

A first SSB in the at least one SSB sent by the network device may further include a PBCH, the PBCH includes SFN indicator bits and/or a half-frame indicator bit, and the SFN indicator bits and/or the half-frame indicator bit are/is used to determine a number of the first SSB (which may also be referred to as an index of the first SSB). Correspondingly, after receiving the first SSB, the terminal device may determine the number of the first SSB based on the SFN indicator bits and/or the half-frame indicator bit included in the PBCH in the first SSB.

For example, $\lceil \log_2 N \rceil - L$ bits in the SFN indicator bits are used to determine the number of the first SSB, where L is an integer, and $0 \leq L \leq \lceil \log_2 N \rceil$.

For example, when N is greater than 8, $\lceil \log_2 N \rceil - 3$ bits in the SFN indicator bits are used to determine the number of the first SSB.

For example, when N is greater than 64, $\lceil \log_2 N \rceil - 5$ bits in the SFN indicator bits are used to determine the number of the first SSB.

For example, when N is greater than 64, $\lceil \log_2 N \rceil - 6$ bits in the SFN indicator bits are used to determine the number of the first SSB.

For example, when N is greater than 128, $\lceil \log_2 N \rceil - 6$ bits or $\lceil \log_2 N \rceil - 7$ bits in the SFN indicator bits are used to determine the number of the first SSB. If $\lceil \log_2 N \rceil - 7$ bits in the SFN indicator bits are used to determine the number of the first SSB, the PBCH further includes the half-frame indicator bit, and the half-frame indicator bit is used to determine the number of the first SSB.

For another example, when $1 \leq N \leq 1024$, $\lceil \log_2 N \rceil$ bits in the SFN indicator bits are to determine the number of the first SSB. In other words, the number of the first SSB may be determined by using only the SFN indicator bits.

For another example, when $1 \leq N \leq 2048$, $\lceil \log_2 N \rceil - 1$ bits in the SFN indicator bits and the half-frame indicator bit are used to determine the number of the first SSB. In other words, the number of the first SSB may be determined by using only the SFN indicator bits and the half-frame indicator bit.

Optionally, a demodulation reference signal (dedicated modulate reference signal, DMRS) sequence index and/or an SSB index in the PBCH are/is also used to determine the number of the first SSB. For example, when N>8, the number of the first SSB is indicated by the following information in the PBCH: the $\lceil \log_2 N \rceil - 3$ bits in the SFN indicator bits and the DMRS sequence index. For another example, when N is greater than 64, the number of the first SSB is indicated by the following information in the PBCH: the $\lceil \log_2 N \rceil - 6$ bits in the SFN indicator bits, the DMRS sequence index, and the SSB index. For example, when $64 < N \leq 128$, the number of the first SSB is indicated by the following information in the PBCH: the half-frame indicator bit, the DMRS sequence index, and the SSB index. For another example, when N>128, the number of the first SSB is indicated by the following information in the PBCH: the $\lceil \log_2 N \rceil - 6$ bits in the SFN indicator bits, the DMRS sequence index, and the SSB index. For another example, when N is greater than 128, the number of the first SSB is indicated by the following information in the PBCH: the $\lceil \log_2 N \rceil - 7$ bits in the SFN indicator bits, the half-frame indicator bit, the DMRS sequence index, and the SSB index. For another example, when N>128, the number of the first SSB is indicated by the following information in the PBCH: the $\lceil \log_2 N \rceil - 7$ bits in the SFN indicator bits, the half-frame indicator bit, the DMRS sequence index, and the SSB index.

In the foregoing examples, the DMRS sequence index occupies three bits, and the SSB index occupies three bits. It may be understood that, when the carrier frequency f is in FR1, the SSB index is one SSB subcarrier offset indicator bit and two reserved bits that are included in the PBCH. In this case, the carrier frequency f is in FR1. The one SSB subcarrier offset indicator bit included in the PBCH is redefined to indicate the SSB index.

For example, a manner in which the network device and the terminal device determine the $\lceil \log_2 N \rceil - 6$ bits that are in the SFN indicator bits and that are used to determine the number of the first SSB includes: The network device and the terminal device determine, based on a change of system frame numbers of any two consecutive system frames in the X system frames and a change of numbers of Y candidate sending positions respectively included in the two consecutive system frames, the $\lceil \log_2 N \rceil - 6$ bits that are in the SFN indicator bits and that are used to determine the number of the first SSB.

For example, it is assumed that N=256, Y=8, the time interval T2 between any two consecutive system frames in the X system frames is equal to two system frames, the $1^{st}$ system frame in the X system frames is the SFN #0, and the SFN #0 is indicated by "0000000000". In other words, SFN indicator bits in eight candidate SSBs transmitted at the eight candidate sending positions in the SFN #0 are all "0000000000". The $2^{nd}$ system frame in the X system frames is the SFN #2, and the SFN #2 is indicated by "0000000010". In other words, SFN indicator bits in eight candidate SSBs transmitted at the eight candidate sending positions in the SFN #2 are all "0000000010".

Numbers of the eight candidate sending positions in the SFN #0 are 0 to 7. Correspondingly, indexes of the candidate SSBs transmitted at the eight candidate sending positions are 0 to 7, and 0 to 7 may be respectively represented by using "00000000", "00000001", "00000010", "00000011", "00000100", "00000101", "00000110", and "00000111". Numbers of the eight candidate sending positions in the SFN #2 are 8 to 15. Correspondingly, indexes of the candidate SSBs transmitted at the eight candidate sending positions are 8 to 15, and 8 to 15 may be respectively represented by using "00001000", "00001001", "00001010", "00001011", "00001100", "00001101", "00001110", and "00001111".

It can be learned from the foregoing that, a change of the numbers of the two consecutive system frames (namely, the SFN #0 and the SNF #2) causes a second bit (also referred to as a $2^{nd}$ bit) and a third bit (also referred to as a $3^{rd}$ bit) in the SFN indicator bits to change from "00" to "01". In addition, a change of the indexes of the candidate SSBs transmitted in the SFN #0 and the SFN #2 causes fourth bits (also referred to as $4^{th}$ bits) and fifth bits (also referred to as $5^{th}$ bits) of the indexes of the candidate SSBs to change from "00" to "01". Therefore, the second bit and the third bit in the SFN indicator bits may be reused to indicate the index of the candidate SSB. In other words, the second bit and the third bit in the SFN indicator bits are used as the fourth bit and the fifth bit of the index of the candidate SSB. In other words, a third least significant bit $\overline{a}_{A+1}$ and a second least significant bit $\overline{a}_{A+2}$ of the system frame are the $5^{th}$ bit and the $4^{th}$ bit of the index of the candidate SSB.

Optionally, a 1st bit to a 3rd bit of the index of the candidate SSB are indicated by the DMRS sequence index, and a 6th bit to an 8th bit of the index of the candidate SSB are indicated by the SSB index. That is, the 6th bit to the 8th bit of the index of the candidate SSB are indicated by $\overline{a_{\overline{A}+7}}$, $\overline{a_{\overline{A}+6}}$, and $\overline{a_{\overline{A}+5}}$ in a PBCH payload (payload).

For another example, it is assumed that N=128, Y=8, the time interval T2 between any two consecutive system frames in the X system frames is equal to two system frames, the 1st system frame in the X system frames is the SFN #0, and the SFN #0 is indicated by "0000000000". In other words, SFN indicator bits in eight candidate SSBs transmitted at the eight candidate sending positions in the SFN #0 are all "0000000000". The 2nd system frame in the X system frames is the SFN #2, and the SFN #2 is indicated by "0000000010". In other words, SFN indicator bits in eight SSBs transmitted at the eight candidate sending positions in the SFN #2 are all "0000000010".

Numbers of the eight candidate sending positions in the SFN #0 are 0 to 7. Correspondingly, indexes of the candidate SSBs transmitted at the eight candidate sending positions are 0 to 7, and 0 to 7 may be respectively represented by using "0000000", "0000001", "0000010", "0000011", "0000100", "0000101", "0000110", and "0000111". Numbers of the eight candidate sending positions in the SFN #2 are 8 to 15. Correspondingly, indexes of the candidate SSBs transmitted at the eight candidate sending positions are 8 to 15, and 8 to 15 may be respectively represented by using "0001000", "0001001", "0001010", "0001011", "0001100", "0001101", "0001110", and "0001111".

It can be learned from the foregoing that, a change of the numbers of the two consecutive system frames (namely, the SFN #0 and the SNF #2) causes a second bit in the SFN indicator bits to change from "0" to "1". In addition, a change of the indexes of the candidate SSBs transmitted in the SFN #0 and the SFN #2 causes fourth bits of the indexes of the candidate SSBs to change from "0" to "1". Therefore, the second bit in the SFN indicator bits may be reused to indicate the index of the candidate SSB. In other words, the second bit in the SFN indicator bits is used as a fourth bit in an index indicator bit of the candidate SSB. In other words, a second least significant bit $\overline{a_{\overline{A}+2}}$ of the system frame is the 4th bit of the index of the candidate SSB.

Optionally, a 1st bit to a 3rd bit of the index of the candidate SSB are indicated by the DMRS sequence index, and a 5th bit to a 7th bit of the index of the candidate SSB are indicated by the SSB index. That is, the 5th bit to the 7th bit of the index of the candidate SSB are indicated by $\overline{a_{\overline{A}+7}}$, $\overline{a_{\overline{A}+6}}$, and $\overline{a_{\overline{A}+5}}$ in a PBCH payload (payload).

For another example, it is assumed that N=256, Y=32, the time interval T2 between any two consecutive system frames in the X system frames is equal to two system frames, the 1st system frame in the X system frames is the SFN #0, and the SFN #0 is indicated by "0000000000". In other words, SFN indicator bits in 32 candidate SSBs transmitted at 32 candidate sending positions in the SFN #0 are all "0000000000". The 2nd system frame in the X system frames is the SFN #2, and the SFN #2 is indicated by "0000000010". In other words, SFN indicator bits in 32 candidate SSBs transmitted at 32 candidate sending positions in the SFN #2 are all "0000000010".

Numbers of the 32 candidate sending positions in the SFN #0 are 0 to 31. Correspondingly, indexes of the candidate SSBs transmitted at the 32 candidate sending positions are 0 to 31, and the numbers 0 to 31 may be respectively represented by using "00000000", "00000001", "00000010", "00000011", "00000100", "00011101", "00011110", and "00011111". Numbers of the 32 candidate sending positions in the SFN #2 are 32 to 63. Correspondingly, indexes of the candidate SSBs transmitted at the 32 candidate sending positions are 32 to 63, and the numbers 32 to 63 may be respectively represented by using "00100000", "00100001", "00100010", "00100011", "00100100", "00111101", "00111110", and "00111111".

It can be learned from the foregoing that, a change of the numbers of the two consecutive system frames (namely, the SFN #0 and the SNF #2) causes a second bit and a third bit in the SFN indicator bits to change from "00" to "01". In addition, a change of the indexes of the candidate SSBs transmitted in the SFN #0 and the SFN #2 causes sixth bits and seventh bits of the indexes of the candidate SSBs to change from "00" to "01". Therefore, the second bit and the third bit in the SFN indicator bits may be reused to indicate the index of the candidate SSB. In other words, the second bit and the third bit in the SFN indicator bits are used as the sixth bit and the seventh bit of the index of the candidate SSB. In other words, a third least significant bit $\overline{a_{\overline{A}+1}}$ and a second least significant bit $\overline{a_{\overline{A}+2}}$ of the system frame are the 7th bit and the 6th bit of the index of the candidate SSB.

Optionally, a 1st bit to a 3rd bit of the number index of the candidate SSB are indicated by the DMRS sequence index, and a 4th bit, a 5th bit, and an 8th bit of the index of the candidate SSB are indicated by the SSB index. That is, the 4th bit, the 5th bit, and the 8th bit of the index of the candidate SSB are respectively indicated by $\overline{a_{\overline{A}+7}}$, $\overline{a_{\overline{A}+6}}$, and $\overline{a_{\overline{A}+5}}$ in a PBCH payload (payload).

In conclusion, in the foregoing examples, the manner in which the network device and the terminal device determine the $\lceil \log_2 N \rceil - 6$ bits that are in the SFN indicator bits and that are used to determine the number of the first SSB may include: The network device and the terminal device determine, based on the time interval T2, that the $\lceil \log_2 N \rceil - 6$ bits are a $(\log_2 (T2'' \cdot 2))$th bit to a ($\lceil \log_2 (N \cdot T2'' \cdot 2) \rceil - 7$)th bit in the SFN indicator bits; and the network device and the terminal device determine, based on the quantity Y of candidate sending positions, that the $(\log_2$

(T2" · 2) )th bit to the ( $\lceil \log_2 (N \cdot T2'' \cdot 2) \rceil - 7$ )th bit are a (log$_2$ (Y · 2) )th bit to a ( $\lceil \log_2 (N \cdot Y \cdot 2) \rceil - 7$ )th bit in $\lceil \log_2 N \rceil$ bits that are used to represent the number of the first SSB. It may be understood that, when Y and T2" are powers of 2, the $\lceil \log_2 N \rceil - 6$ bits that are in the SFN indicator bits and that are used to determine the number of the first SSB may be determined in the foregoing manner.

For example, a manner in which the network device and the terminal device determine the $\lceil \log_2 N \rceil - 7$ bits that are in the SFN indicator bits and that are used to determine the number of the first SSB includes: The network device and the terminal device determine, based on a change of system frame numbers of any two consecutive system frames in the X system frames and a change of numbers of Y candidate sending positions respectively included in the two consecutive system frames, the $\lceil \log_2 N \rceil - 7$ bits that are in the SFN indicator bits and that are used to determine the number of the first SSB.

For example, it is assumed that N=256, Y=64, the time interval T2 between any two consecutive system frames in the X system frames is equal to four system frames, the 1st system frame in the X system frames is the SFN #0, and the SFN #0 is indicated by "0000000000". In other words, SFN indicator bits in 64 candidate SSBs transmitted at 64 candidate sending positions in the SFN #0 are all "0000000000". The 2nd system frame in the X system frames is an SFN #4, and the SFN #4 is indicated by "0000000100". In other words, SFN indicator bits in 64 candidate SSBs transmitted at 64 candidate sending positions in the SFN #4 are all "0000000100".

Numbers of the 64 candidate sending positions in the SFN #0 are 0 to 63. Correspondingly, indexes of the candidate SSBs transmitted at the 64 candidate sending positions are 0 to 63, and the numbers 0 to 63 may be respectively represented by using "00000000", "00000001", "00000010", "00000011", "00000100", "00111101", "00111110", and "00111111". Numbers of the 64 candidate sending positions in the SFN #4 are 64 to 127. Correspondingly, indexes of the candidate SSBs transmitted at the 64 candidate sending positions are 64 to 127, and the numbers 64 to 127 may be respectively represented by using "01000000", "01000001", "01000010", "01000011", "01000100", "01111101", "01111110", and "01111111".

It can be learned from the foregoing that, a change of the numbers of the two consecutive system frames (namely, the SFN #0 and the SNF #2) causes a third bit in the SFN indicator bits to change from "0" to "1". In addition, a change of the indexes of the candidate SSBs transmitted in the SFN #0 and the SFN #4 causes seventh bits of the indexes of the candidate SSBs to change from "0" to "1". Therefore, the third bit in the SFN indicator bits may be reused to indicate the index of the candidate SSB. In other words, the third bit in the SFN indicator bits is used as the seventh bit of the index of the candidate SSB. In other words, a third least significant bit $\overline{a}_{\overline{A}+1}$ of the system frame is the 7th bit of the index of the candidate SSB.

Optionally, a 1st bit to a 3rd bit of the index of the candidate SSB are indicated by the DMRS sequence index, and a 4th bit to a 6th bit of the index of the candidate SSB are indicated by the SSB index. That is, the 4th bit to the 6th bit of the index of the candidate SSB are respectively indicated by $\overline{a}_{\overline{A}+7}$, $\overline{a}_{\overline{A}+6}$, and $\overline{a}_{\overline{A}+5}$ in a PBCH payload (payload). An 8th bit of the index of the candidate SSB is indicated by the half-frame indicator bit. That is, the 8th bit of the candidate SSB index is indicated by $\overline{a}_{\overline{A}+4}$ in the PBCH payload.

In conclusion, in the foregoing examples, the manner in which the network device and the terminal device determine the $\lceil \log_2 N \rceil - 7$ bits that are in the SFN indicator bits and that are used to determine the number of the first SSB may include: The network device and the terminal device determine, based on the time interval T2, that the $\lceil \log_2 N \rceil - 7$ bits are a (log$_2$ (T2" · 2))th bit to a ( $\lceil \log_2 (N \cdot T2'' \cdot 2) \rceil - 8$ )th bit in the SFN indicator bits; and the network device and the terminal device determine, based on the quantity Y of candidate sending positions, that the (log$_2$ (T2" · 2) )th bit to the ( $\lceil \log_2 (N \cdot T2'' \cdot 2) \rceil - 8$ )th bit are a (log$_2$ (Y · 2) )th bit to a ( $\lceil \log_2 (N \cdot Y \cdot 2) \rceil - 8$ )th bit in $\lceil \log_2 N \rceil$ bits that are used to represent the number of the first SSB. It may be understood that, when Y and T2" are powers of 2, the $\lceil \log_2 N \rceil - 7$ bits that are in the SFN indicator bits and that are used to determine the number of the first SSB may be determined in the foregoing manner.

For example, a manner in which the network device and the terminal device determine the $\lceil \log_2 N \rceil - 5$ bits that are in the SFN indicator bits and that are used to determine the number of the first SSB includes: The network device and the terminal device determine, based on a change of system frame numbers of any two consecutive system frames in the X system frames and a change of numbers of Y candidate sending positions respectively included in the two consecutive system frames, the $\lceil \log_2 N \rceil - 5$ bits that are in the SFN indicator bits and that are used to determine the number of the first SSB.

For example, it is assumed that N=128, Y=8, the time interval T2 between any two consecutive system frames in the X system frames is equal to two system frames, the 1st system frame in the X system frames is the SFN #0, and the SFN #0 is indicated by "0000000000". In other words, SFN indicator bits in eight candidate SSBs transmitted at the eight candidate sending positions in the SFN #0 are all "0000000000". The 2nd system frame in the X system frames is the SFN #2, and the SFN #2 is indicated by "0000000010". In other words, SFN indicator bits in eight SSBs transmitted at the eight candidate sending positions in the SFN #2 are all "0000000010".

Numbers of the eight candidate sending positions in the SFN #0 are 0 to 7. Correspondingly, indexes of the candidate SSBs transmitted at the eight candidate sending positions are 0 to 7, and 0 to 7 may be respectively represented by using "0000000", "0000001", "0000010", "0000011", "0000100", "0000101", "0000110", and "0000111". Numbers of the eight candidate sending positions in the SFN #2 are 8 to 15. Correspondingly, indexes of the candidate SSBs transmitted at the eight candidate sending positions are 8 to 15, and 8 to 15 may be respectively represented by using "0001000", "0001001", "0001010", "0001011", "0001100", "0001101", "0001110", and "0001111".

It can be learned from the foregoing that, a change of the numbers of the two consecutive system frames (namely, the SFN #0 and the SNF #2) causes a second bit (also referred to as a 2nd bit) and a third bit (also referred to as a 3rd bit) in the SFN indicator bits to change from "00" to "01". In addition, a change of the indexes of the candidate SSBs transmitted in the SFN #0 and the SFN #2 causes fourth bits (also referred to as 4th bits) and fifth bits (also referred to as 5th bits) of the indexes of the candidate SSBs to change from "00" to "01". Therefore, the second bit and the third bit in the SFN indicator bits may be reused to indicate the index of the candidate SSB. In other words, the second bit and the third bit in the SFN indicator bits are used as the fourth bit and the fifth bit of the index of the candidate SSB. In other words, a third least significant bit $\overline{a}_{\overline{A}+1}$ and a second least significant bit $\overline{a}_{\overline{A}+2}$ of the system frame are the 5th bit and the 4th bit of the index of the candidate SSB.

Optionally, a 1st bit to a 3rd bit of the index of the candidate SSB are indicated by the DMRS sequence index, and a 6th bit and a 7th bit of the index of the candidate SSB are indicated by the SSB index. That is, the 6th bit and the 7th bit of the index of the candidate SSB are indicated by $\overline{a}_{\overline{A}+7}$ and $\overline{a}_{\overline{A}+6}$ in a PBCH payload (payload).

For another example, it is assumed that N=64, Y=8, the time interval T2 between any two consecutive system frames in the X system frames is equal to two system frames, the 1st system frame in the X system frames is the SFN #0, and the SFN #0 is indicated by "0000000000". In other words, SFN indicator bits in eight candidate SSBs transmitted at the eight candidate sending positions in the SFN #0 are all "0000000000". The 2nd system frame in the X system frames is the SFN #2, and the SFN #2 is indicated by "0000000010". In other words, SFN indicator bits in eight SSBs transmitted at the eight candidate sending positions in the SFN #2 are all "0000000010".

Numbers of the eight candidate sending positions in the SFN #0 are 0 to 7. Correspondingly, indexes of the candidate SSBs transmitted at the eight candidate sending positions are 0 to 7, and 0 to 7 may be respectively represented by using "0000000", "0000001", "0000010", "0000011", "0000100", "0000101", "0000110", and "0000111". Numbers of the eight candidate sending positions in the SFN #2 are 8 to 15. Correspondingly, indexes of the candidate SSBs transmitted at the eight candidate sending positions are 8 to 15, and 8 to 15 may be respectively represented by using "0001000", "0001001", "0001010", "0001011", "0001100", "0001101", "0001110", and "0001111".

It can be learned from the foregoing that, a change of the numbers of the two consecutive system frames (namely, the SFN #0 and the SNF #2) causes a second bit in the SFN indicator bits to change from "0" to "1". In addition, a change of the indexes of the candidate SSBs transmitted in the SFN #0 and the SFN #2 causes fourth bits of the indexes of the candidate SSBs to change from "0" to "1". Therefore, the second bit in the SFN indicator bits may be reused to indicate the index of the candidate SSB. In other words, the second bit in the SFN indicator bits is used as a fourth bit in an index indicator bit of the candidate SSB. In other words, a second least significant bit $\overline{a}_{\overline{A}+2}$ of the system frame is the 4th bit of the index of the candidate SSB.

Optionally, a 1st bit to a 3rd bit of the index of the candidate SSB are indicated by the DMRS sequence index, and a 5th bit and a 6th bit of the index of the candidate SSB are indicated by the SSB index. That is, the 5th bit and the 6th bit of the index of the candidate SSB are indicated by $\overline{a}_{\overline{A}+7}$ and $\overline{a}_{\overline{A}+6}$ in a PBCH payload (payload).

In conclusion, in the foregoing examples, the manner in which the network device and the terminal device determine the $\lceil \log_2 N \rceil - 5$ bits that are in the SFN indicator bits and that are used to determine the number of the first SSB may include: The network device and the terminal device determine, based on the time interval T2, that the $\lceil \log_2 N \rceil - 5$ bits are a $(\log_2 (T2'' \cdot 2))$th bit to a $(\lceil \log_2 (N \cdot T2'' \cdot 2) \rceil - 6)$th bit in the SFN indicator bits; and the network device and the terminal device determine, based on the quantity Y of candidate sending positions, that the $(\log_2 (T2'' \cdot 2))$th bit to the $(\lceil \log_2 (N \cdot T2'' \cdot 2) \rceil - 6)$th bit are a $(\log_2 (Y \cdot 2))$th bit to a $(\lceil \log_2 (N \cdot Y \cdot 2) \rceil - 6)$th bit in

$\lceil \log_2 N \rceil$ bits that are used to represent the number of the first SSB. It may be understood that, when Y and T2" are powers of 2, the $\lceil \log_2 N \rceil - 5$ bits that are in the SFN indicator bits and that are used to determine the number of the first SSB may be determined in the foregoing manner.

It should be noted that the terminal device may determine, based on the sending parameter, the time interval T2 and the quantity Y of candidate sending positions included in each system frame.

For example, the sending parameter includes the time interval T2 and the quantity Y of candidate sending positions. For another example, if the sending parameter includes the sweeping periodicity T1 and the quantity X of system frames, the terminal device may determine the quantity Y of candidate sending positions based on the quantity X of system frames, where $Y = \lceil N/X \rceil$; and determine the time interval T2 based on the quantity X of system frames and the sweeping periodicity T3, where $1 \leq T2 \leq \lfloor T3''/X \rfloor$.

S430: The terminal device determines a time position of the at least one SSB based on a number of the at least one SSB and the sending parameter.

After determining a number of each of the at least one SSB, the terminal device may determine the time position of the at least one SSB based on the number of each SSB and the sending parameter.

The following uses an example in which the terminal device determines a time position of the first SSB for description.

In an implementation A, if sending parameter includes the sweeping periodicity T3 and the time interval T2, that the terminal device determines the time position of the first SSB based on the number of the first SSB and the sending parameter includes: The terminal device determines, based on the sweeping periodicity T3 and the time interval T2, the quantity X of system frames of the candidate sending positions included in each periodicity T1, where $X = \lceil T3/T2 \rceil$; the terminal device determines, based on the quantity X of system frames of the candidate sending positions included in each periodicity T1, the quantity Y of candidate sending positions included in each system frame, where $Y = \lceil N/X \rceil$; and the terminal device determines a start symbol index of the first SSB based on the number of the first SSB and the quantity Y of candidate sending positions included in each system frame.

The terminal device may determine, based on the number S of the first SSB and the quantity Y of candidate sending positions included in each system frame, that a candidate sending position corresponding to the first SSB is a Y'th candidate sending position in Y candidate sending positions included in a system frame in which the first SSB is located, where Y'=(S+1) mod Y. Further, the terminal device may determine, based on patterns of the Y candidate sending positions included in each system frame, a start symbol index of the candidate sending position corresponding to the first SSB. In other words, the terminal device may determine the start symbol index of the first SSB in the system frame to which the first SSB belongs.

For example, if the carrier frequency f≤3 GHz and the SCS=15 kHz, the terminal device determines that the start symbol index of the first SSB is a Y'th value in {2, 8}+14×n, where n=0 or 1.

Alternatively, if the carrier frequency f is in FR1, f>3 GHz, and the SCS=15 kHz, the terminal device determines that the start symbol index of the first SSB is a Y'th value in {2, 8}+14×n, where n=0, 1, 2, or 3.

Alternatively, if the carrier frequency f≤3 GHz and the SCS=30 kHz, the terminal device determines that the start symbol index of the first SSB is a Y'th value in {4, 8, 16, 20}+28×n, where n=0; or the terminal device determines that the start symbol index of the first SSB is a Y'th value in {2, 8}+14×n, where n=0 or 1.

Alternatively, if the carrier frequency f is in FR1, f>3 GHz, and the SCS=30 kHz, the terminal device determines that the start symbol index of the first SSB is a Y'th value in {4, 8, 16, 20}+28×n, where n=0 or 1; or the terminal device determines that the start symbol index of the first SSB is a y'th value in {2, 8}+14×n, where n=0, 1, 2, or 3. It is assumed that the number of the first SSB is S=7 and Y=8. In this case, the candidate sending position corresponding to the first SSB is an 8th candidate sending position in eight candidate sending positions included in the system frame in which the first SSB is located. In this case, the terminal device determines that the start symbol index of the first SSB is 48 or 50.

Alternatively, if the carrier frequency f is in FR2 and the SCS=120 kHz, the terminal device determines that the start symbol index of the first SSB is a Y'th value in {4, 8, 16, 20}+28×n, where n=0, 1, 2, 3, 5, 6, 7, 8, 10, 11, 12, 13, 15, 16, 17, or 18. For example, if the value of Y is 32, the terminal device determines that the start symbol index of the first SSB is the Y'th value in {4, 8, 16, 20}+28×n, where n=0, 1, 2, 3, 5, 6, 7, or 8. For another example, if Y=8, the terminal device determines that the start symbol index of the first SSB is the Y'th value in {4, 8, 16, 20}+28×n, where n=0 or 1; or the terminal device determines that the start symbol index of the first SSB is a y'th value in {2, 8}+14×n, where n=0, 1, 2, or 3.

Alternatively, if the carrier frequency f is in FR2 and the SCS=240 kHz, the terminal device determines that the start symbol index of the first SSB is a Y'th value in {8, 12, 16, 20, 32, 36, 40, 44}+56×n, where n=0, 1, 2, 3, 5, 6, 7, or 8.

After determining the start symbol index of the first SSB, the terminal device may determine the time position of the first SSB based on a quantity of symbols occupied by the first SSB.

It should be noted that the terminal device may determine, based on SFN indicator bits included in a PBCH in the first SSB, the system frame in which the first SSB is located. For example, if the SFN indicator bits included in the PBCH in the first SSB are "0000000000", the terminal device determines that a system frame number of the system frame in which the first SSB is located is 0.

In an implementation B, if the sending parameter includes the quantity Y of candidate sending positions included in each system frame, that the terminal device determines the time position of the first SSB based on the number of the first SSB and the sending parameter includes: The terminal device determines a start symbol index of the first SSB based on the number of the first SSB and the quantity Y of candidate sending positions included in each system frame.

For a manner in which the terminal device determines, based on the number of the first SSB and the quantity Y of candidate sending positions, the start symbol index of the first SSB in a system frame to which the first SSB belongs, refer to the descriptions in the implementation A.

In an implementation C, the sending parameter includes the quantity X of system frames of the candidate sending positions included in each periodicity T1, and that the terminal device determines the time position of the first SSB based on the number of the first SSB and the sending parameter includes: The terminal device determines, based on the quantity X of system frames of the candidate sending positions included in each periodicity T1, the quantity Y of candidate sending positions included in each system frame, where $Y = \lceil N/X \rceil$; and the terminal device determines a start symbol index of the first SSB based on the number of the first SSB and the quantity Y of candidate sending positions included in each system frame.

For a manner in which the terminal device determines, based on the number of the first SSB and the quantity Y of candidate sending positions, the start symbol index of the first SSB in a system frame to which the first SSB belongs, refer to the descriptions in the implementation A.

Optionally, after determining the time position of the first SSB, the terminal device may synchronize with the network device based on the time position of the first SSB.

In embodiments of this application, in a definition of an existing standard, one system frame may include a maximum of four, eight, or 64 candidate sending positions. Therefore, when the network device may determine the N candidate sending positions for transmitting the N SSBs in one periodicity, and the N candidate sending positions are in at least two system frames, N may be greater than 4, 8, or 64. For example, when the N candidate sending positions are in two system frames, and based on a definition in the existing standard, each system frame includes 64 candidate sending positions, N is equal to 128. Further, when the network device sends the SSB at the N candidate sending positions, the network device may send more SSBs, to help meet a sweeping requirement of single-satellite coverage.

In addition, when a quantity of candidate sending positions that are determined by the network device and that are for transmitting the SSB in one periodicity exceeds 64, a quantity of SSBs sent by the network device at the candidate sending positions may exceed 64. In this case, the SFN indicator bits and/or the half-frame indicator bit included in the PBCH in the SSB may be reused to indicate the number of the SSB, so as to indicate more SSBs. For example, when the SFN indicator bits indicate the number of the SSB, because the SFN indicator bits include 10 bits, a maximum value of the number of the SSB that can be indicated by the SFN indicator bits may be 1023. For another example, when the number of the SSB is indicated by the SFN indicator bits, the DMRS sequence index, and the SSB index together, because the SFN indicator bits include 10 bits, the DMRS sequence index includes three bits, and the SSB index includes three bits, a maximum value of the number of the SSB that can be indicated by the SFN indicator bits, the DMRS sequence index, and the SSB index may be 65536. For another example, when the number of the SSB is indicated by the SFN indicator bits, the half-frame indicator bit, the DMRS sequence index, and the SSB index together, a maximum value of the number of the SSB that can be indicated may be 131072.

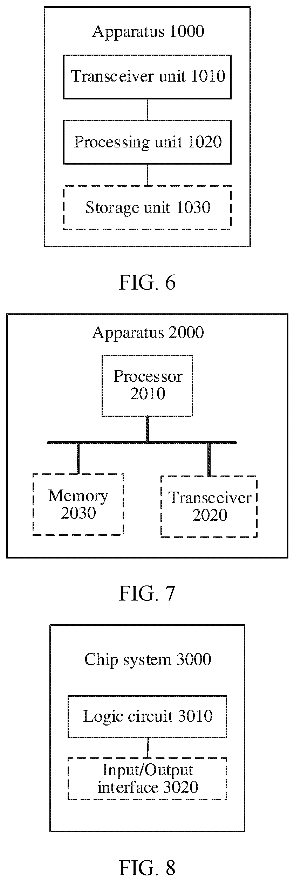

The method provided in embodiments of this application is described above in detail with reference to FIG. 4 and FIG. 5. The following describes in detail communication apparatuses provided in embodiments of this application with reference to FIG. 6 to FIG. 8. It should be understood that descriptions of apparatus embodiments correspond to descriptions of method embodiments. Therefore, for content that is not described in detail, refer to the foregoing method embodiments. For brevity, details are not described herein again.

FIG. 6 is a block diagram of a communication apparatus 1000 according to an embodiment of this application. As shown in FIG. 6, the communication apparatus 1000 may include a transceiver unit 1010 and a processing unit 1020.

In a possible design, the communication apparatus 1000 may be the terminal device in the foregoing method embodiments, or may be a chip that implements a function of the terminal device in the foregoing method embodiments.

It should be understood that the communication apparatus 1000 may correspond to the terminal device in the method 400 according to embodiments of this application, and the communication apparatus 1000 may include units configured to perform the method performed by the terminal device in the method 400 in FIG. 4. In addition, units in the communication apparatus 1000 and the foregoing other operations and/or functions are separately used to implement corresponding procedures of the method 400 in FIG. 4. It should be understood that a specific process in which the units perform the foregoing corresponding steps is described in detail in the foregoing method embodiments. For brevity, details are not described herein again.

In another possible design, the communication apparatus 1000 may be network device in the foregoing method embodiments, or may be a chip configured to implement a function of the network device in the foregoing method embodiments.

It should be understood that the communication apparatus 1000 may correspond to the network device in the method 400 according to embodiments of this application, and the communication apparatus 1000 may include units configured to perform the method performed by the network device in the method 400 in FIG. 4. In addition, units in the communication apparatus 1000 and the foregoing other operations and/or functions are separately used to implement corresponding procedures of the method 400 in FIG. 4. It should be understood that a process in which the units perform the foregoing corresponding steps is described in detail in the foregoing method embodiments. For brevity, details are not described herein again.

It should be further understood that the transceiver unit 1010 in the communication apparatus 1000 may correspond to a transceiver 2020 in a communication device 2000 shown in FIG. 7, and the processing unit 1020 in the communication apparatus 1000 may correspond to a processor 2010 in a communication device 2000 shown in FIG. 7.

It should be further understood that when the communication apparatus 1000 is a chip, the chip includes a transceiver unit. Optionally, the chip may further include a processing unit. The transceiver unit may be an input/output circuit or a communication interface. The processing unit may be a processor, a microprocessor, or an integrated circuit integrated on the chip.

The transceiver unit 1010 is configured to implement signal receiving and sending operations of the communication apparatus 1000, and the processing unit 1020 is configured to implement a signal processing operation of the communication apparatus 1000.

Optionally, the communication apparatus 1000 further includes a storage unit 1030, and the storage unit 1030 is configured to store instructions.

FIG. 7 is a block diagram of an apparatus 2000 according to an embodiment of this application. As shown in FIG. 7, the apparatus 2000 includes at least one processor 2010. The processor 2010 is coupled to a memory, and is configured to execute instructions stored in the memory, to perform the method in FIG. 4. Optionally, the apparatus 2000 further includes a transceiver 2020. The processor 2010 is coupled to the memory, and is configured to execute the instructions stored in the memory, to control the transceiver 2020 to send a signal and/or receive a signal. For example, the processor 2010 may control the transceiver 2020 to send an SSB. Optionally, the apparatus 2000 further includes a memory 2030, configured to store instructions.

It should be understood that the processor 2010 and the memory 2030 may be combined into one processing apparatus. The processor 2010 is configured to execute program code stored in the memory 2030 to implement the foregoing functions. During specific implementation, the memory 2030 may alternatively be integrated into the processor 2010, or may be independent of the processor 2010.

It should be further understood that the transceiver 2020 may include a receiver (also referred to as a receiver machine) and a transmitter (also referred to as a transmitter machine). The transceiver 2020 may further include an antenna, and there may be one or more antennas. The transceiver 2020 may alternatively be a communication interface or an interface circuit.

When the apparatus 2000 is a chip, the chip includes a transceiver unit and a processing unit. The transceiver unit may be an input/output circuit or a communication interface, and the processing unit may be a processor, a microprocessor, or an integrated circuit integrated on the chip.

FIG. 8 is a diagram of a chip system according to an embodiment of this application. The chip system herein may alternatively be a system including a circuit. The chip system 3000 shown in FIG. 8 includes a logic circuit 3010 and an input/output interface (input/output interface) 3020. The logic circuit is configured to: be coupled to the input interface, and transmit data (for example, an SSB) through the input/output interface, to perform the method in FIG. 4.

An embodiment of this application further provides a processing apparatus, including a processor and an interface. The processor may be configured to perform the method in the foregoing method embodiments.

It should be understood that the processing apparatus may be a chip. For example, the processing apparatus may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processing unit (digital signal processor, DSP), a micro controller unit (micro controller unit, MCU), a programmable controller (programmable logic device, PLD), or another integrated chip.

In an implementation process, steps in the foregoing method may be implemented by using a hardware integrated logic circuit in the processor or by using instructions in a form of software. The steps of the method disclosed with reference to embodiments of this application may be directly performed and completed by a hardware processor, or may be performed and completed by a combination of hardware in the processor and a software module. The software module may be located in a mature storage medium in the art, such as a random access register, a flash memory, a read-only memory, a programmable read-only memory, an electrically erasable programmable memory, or a register. The storage medium is located in the memory, and the processor reads information in the memory and completes the steps in the foregoing method in combination with hardware of the processor. To avoid repetition, details are not described herein again.

It should be noted that, the processor in embodiments of this application may be an integrated circuit chip, and has a signal processing capability. In the implementation process, the steps in the foregoing method embodiments may be implemented by using the hardware integrated logic circuit in the processor or by using the instructions in the form of software. The processor may be a general-purpose processor, a digital signal processor (DSP), an application-specific integrated circuit (ASIC) a field programmable gate array (FPGA), or another programmable logic device, a discrete gate or a transistor logic device, or a discrete hardware component. The processor can implement or perform the methods, the steps, and logical block diagrams that are disclosed in embodiments of this application. The general-purpose processor may be a microprocessor, or the processor may be any conventional processor or the like.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache.

According to the method provided in embodiments of this application, this application further provides a computer program product. The computer program product includes computer program code. When the computer program code is run on a computer, the computer is enabled to perform the method in the embodiment shown in FIG. 4.

According to the method provided in embodiments of this application, this application further provides a computer-readable medium. The computer-readable medium stores program code. When the program code is run on a computer, the computer is enabled to perform the method in the embodiment shown in FIG. 4.

According to the method provided in embodiments of this application, this application further provides a system. The system includes the foregoing terminal device and the foregoing network device.

All or some of the foregoing embodiments may be implemented by software, hardware, firmware, or any combination thereof. When the software is used for implementation, all or some of embodiments may be implemented in a form of a computer program product. The computer program product includes one or more computer instructions. When the computer instructions are loaded and executed on a computer, all or some of the procedures or functions in embodiments of this application are generated. The computer instructions may be stored in a computer-readable storage medium or transmitted from one computer-readable information medium to another computer-readable storage medium. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state disc, SSD)), or the like.

In several embodiments provided in this application, it should be understood that the disclosed system, apparatus, and method may be implemented in another manner. For example, the described apparatus embodiments are merely examples. For example, division into the units is merely logical function division. During actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A synchronization signal block transmission method, comprising:

   receiving, by a terminal device, at least one of N synchronization signal blocks SSBs; and

determining, by the terminal device, a time position of a first SSB based on a number of the first SSB in the at least one SSB and a sending parameter, wherein the sending parameter is used to determine N candidate sending positions for transmitting the N SSBs in one periodicity T1, the N candidate sending positions are in at least two system frames, and the sending parameter comprises one or more of the following parameters: a sweeping periodicity T3, a quantity Y of candidate sending positions comprised in each system frame, a time interval T2 between two consecutive system frames of candidate sending positions comprised in each periodicity T1, and a quantity X of system frames of the candidate sending positions comprised in each periodicity T1, wherein T1, Y, T3, and T2 are positive integers, and N and X are integers greater than 1.

2. The method according to claim 1, wherein the first SSB comprises a physical broadcast channel PBCH, the PBCH comprises system frame number SFN indicator bits and/or a half-frame indicator bit, and the SFN indicator bits and/or the half-frame indicator bit are/is used to determine the number of the first SSB.

3. The method according to claim 2, wherein the PBCH comprises the SFN indicator bits, and the number of the first SSB is represented by using $\lceil \log_2 N \rceil$ bits; and

when N>64, $\lceil \log_2 N \rceil - 6$ bits in the SFN indicator bits are used to determine the number of the first SSB, wherein $\lceil \ \rceil$ represents rounding up; or

when N>128, $\lceil \log_2 N \rceil - 6$ bits or $\lceil \log_2 N \rceil - 7$ bits in the SFN indicator bits are used to determine the number of the first SSB.

4. The method according to claim 3, wherein the $\lceil \log_2 N \rceil - 6$ bits in the SFN indicator bits are used to determine the number of the first SSB, and the method further comprises:

determining, by the terminal device based on the time interval T2, that the $\lceil \log_2 N \rceil - 6$ bits in the SFN indicator bits are a $(\log_2 (T2'' \cdot 2))^{th}$ bit to a ( $\lceil \log_2 (N \cdot T2'' \cdot 2) \rceil - 7$ )$^{th}$ bit in the SFN indicator bits; and determining, by the terminal device based on the quantity Y of candidate sending positions comprised in each system frame, that the $(\log_2 (T2'' \cdot 2))^{th}$ bit to the ( $\lceil \log_2 (N \cdot T2'' \cdot 2) \rceil - 7$ )$^{th}$ bit in the SFN indicator bits are a $(\log_2 (Y \cdot 2))^{th}$ bit to a ( $\lceil \log_2 (N \cdot Y \cdot 2) \rceil - 7$ )$^{th}$ bit in the $\lceil \log_2 N \rceil$ bits, wherein T2'' and Y are powers of 2, and if T2 represents a quantity of system frames comprised in the time interval, T2'' = T2, or if T2 represents duration of the time interval, T2'' = T2/T$_{frame}$, and T$_{frame}$ represents duration of one system frame.

5. The method according to claim 3, wherein the $\lceil \log_2 N \rceil - 7$ bits in the SFN indicator bits are used to determine the number of the first SSB, and the method further comprises:

determining, by the terminal device based on the time interval T2, that the $\lceil \log_2 N \rceil - 7$ bits in the SFN indicator bits are a $(\log_2 (T2'' \cdot 2))^{th}$ bit to a ( $\lceil \log_2 (N \cdot T2'' \cdot 2) \rceil - 8$ )$^{th}$ bit in the SFN indicator bits; and determining, by the terminal device based on the quantity Y of candidate sending positions comprised in each system frame, that the $(\log_2 (T2'' \cdot 2))^{th}$ bit to the ( $\lceil \log_2 (N \cdot T2'' \cdot 2) \rceil - 8$ )$^{th}$ bit in the SFN indicator bits are a

$(\log_2 (Y \cdot 2))^{th}$ bit to a ( $\left\lceil \log_2 (N \cdot Y \cdot 2) \right\rceil - 8$ )$^{th}$ bit in the $\left\lceil \log_2 N \right\rceil$ bits, wherein T2" and Y are powers of 2, and if T2 represents a quantity of system frames comprised in the time interval, T2" = T2 , or if T2 represents duration of the time interval, T2" = T2/T$_{frame}$, wherein T$_{frame}$ represents duration of one system frame.

6. The method according to any one of claims 1 to 5, wherein the sending parameter comprises the sweeping periodicity T3 and the time interval T2, and the determining, by the terminal device, a time position of a first SSB based on a number of the first SSB and a sending parameter comprises:

   determining, by the terminal device based on the sweeping periodicity T3 and the time interval T2, the quantity X of system frames of the candidate sending positions comprised in each periodicity T1, wherein $X = \left\lceil T3/T2 \right\rceil$ , and $\lceil \rceil$ represents rounding up;
   determining, by the terminal device based on the quantity X of system frames of the candidate sending positions comprised in each periodicity T1, the quantity Y of candidate sending positions comprised in each system frame, wherein $Y = \left\lceil N/X \right\rceil$ ; and
   determining, by the terminal device based on the number of the first SSB and the quantity Y of candidate sending positions comprised in each system frame, a start symbol index of the first SSB in a system frame in which the first SSB is located.

7. The method according to any one of claims 1 to 5, wherein the sending parameter comprises the quantity Y of candidate sending positions comprised in each system frame, and the determining, by the terminal device, a time position of a first SSB based on a number of the first SSB and a sending parameter comprises:
   determining, by the terminal device based on the number of the first SSB and the quantity Y of candidate sending positions comprised in each system frame, a start symbol index of the first SSB in a system frame in which the first SSB is located.

8. The method according to any one of claims 1 to 5, wherein the sending parameter comprises the quantity X of system frames of the candidate sending positions comprised in each periodicity T1, and the determining, by the terminal device, a time position of a first SSB based on a number of the first SSB and a sending parameter comprises:

   determining, by the terminal device based on the quantity X of system frames of the candidate sending positions comprised in each periodicity T1, the quantity Y of candidate sending positions comprised in each system frame, wherein $Y = \left\lceil N/X \right\rceil$ , and $\lceil \rceil$ represents rounding up; and
   determining, by the terminal device based on the number of the first SSB and the quantity Y of candidate sending positions comprised in each system frame, a start symbol index of the first SSB in a system frame in which the first SSB is located.

9. The method according to any one of claims 6 to 8, wherein the determining, by the terminal device based on the number of the first SSB and the quantity Y of candidate sending positions comprised in each system frame, a start symbol index of the first SSB in a system frame in which the first SSB is located comprises:

   if a subcarrier spacing is 15 kHz, determining, by the terminal device, that the start symbol index of the first SSB is an ((S+1) mod Y)$^{th}$ value in {2, 8}+14×n, wherein n=0 or 1, or n=0, 1, 2, or 3;
   if a subcarrier spacing is 30 kHz, determining, by the terminal device, that the start symbol index of the first SSB is an ((S+1) mod Y)$^{th}$ value in {4, 8, 16, 20}+28×n, wherein n=0, or n=0 or 1;
   if a subcarrier spacing is 30 kHz, determining, by the terminal device, that the start symbol index of the first SSB is an ((S+1) mod Y)$^{th}$ value in {2, 8}+14×n, wherein n=0 or 1, or n=0, 1, 2, or 3;
   if a subcarrier spacing is 120 kHz, determining, by the terminal device, that the start symbol index of the first SSB is an ((S+1) mod Y)$^{th}$ value in {4, 8, 16, 20}+28×n, wherein n=0, 1, 2, 3, 5, 6, 7, 8, 10, 11, 12, 13, 15, 16, 17, or 18; or
   if a subcarrier spacing is 240 kHz, determining, by the terminal device, that the start symbol index of the first SSB is an ((S+1) mod Y)$^{th}$ value in {8, 12, 16, 20, 32, 36, 40, 44}+56×n, wherein n=0, 1, 2, 3, 5, 6, 7, or 8, wherein S is the number of the first SSB, and mod represents a modulo operation.

10. The method according to claim 9, wherein a carrier frequency is in FR2 and the subcarrier spacing is 120 kHz:

if Y=32, the terminal device determines that the start symbol index of the first SSB is the $((S+1) \bmod Y)^{th}$ value in {4, 8, 16, 20}+28×n, wherein n=0, 1, 2, 3, 5, 6, 7, or 8;
if Y=8, the terminal device determines that the start symbol index of the first SSB is the $((S+1) \bmod Y)^{th}$ value in {4, 8, 16, 20}+28×n, wherein n=0, 1; or
if Y=8, the terminal device determines that the start symbol index of the first SSB is the $((S+1) \bmod Y)^{th}$ value in {2, 8}+14×n, wherein n=0, 1, 2, or 3.

11. A synchronization signal block transmission method, comprising:

determining, by a network device based on a sending parameter, N candidate sending positions for transmitting N synchronization signal blocks SSBs in one periodicity T1, wherein the N candidate sending positions are in at least two system frames, and the sending parameter comprises one or more of the following parameters: a sweeping periodicity T3, a quantity Y of candidate sending positions comprised in each system frame, a time interval T2 between two consecutive system frames of candidate sending time positions comprised in each periodicity T1, and a quantity X of system frames of the candidate sending time positions comprised in each periodicity T1, wherein T1, Y, T3, and T2 are positive integers, and N and X are integers greater than 1; and
sending, by the network device, at least one of the N SSBs at at least one of the N candidate sending positions.

12. The method according to claim 11, wherein the sending parameter comprises the sweeping periodicity T3 and the time interval T2, and the determining, by a network device based on a sending parameter, N candidate sending positions for transmitting SSBs in one periodicity T1 comprises:

determining, by the network device based on the sweeping periodicity T3 and the time interval T2, the quantity X of system frames of the candidate sending positions comprised in each periodicity T1, wherein $X = \lceil T3/T2 \rceil$, and $\lceil \ \rceil$ represents rounding up;
determining, by the network device based on the periodicity T1 and the time interval T2, start time positions of the X system frames of the N candidate sending positions; and
determining, by the network device, start symbol indexes of the Y candidate sending positions comprised in each of the X system frames, wherein $Y = \lceil N/X \rceil$.

13. The method according to claim 11, wherein the sending parameter comprises the sweeping periodicity T3 and the quantity Y of candidate sending positions comprised in each system frame, and the determining, by a network device based on a sending parameter, N candidate sending positions for transmitting SSBs in one periodicity T1 comprises:

determining, by the network device based on the quantity Y of candidate sending positions comprised in each system frame, the quantity X of system frames of the candidate sending positions comprised in each periodicity T1, wherein $X = \lceil N/Y \rceil$, and $\lceil \ \rceil$ represents rounding up;
determining, by the network device, the time interval T2 based on the sweeping periodicity T3 and the quantity X of system frames of the candidate sending positions comprised in each periodicity T1, wherein $1 \leq T2 \leq \lfloor T3/X \rfloor$, and $\lfloor \ \rfloor$ represents rounding down;
determining, by the network device based on the periodicity T1 and the time interval T2, start time positions of the X system frames of the N candidate sending positions; and
determining, by the network device, start symbol indexes of the Y candidate sending positions comprised in each of the X system frames.

14. The method according to claim 11, wherein the sending parameter comprises the time interval T2 and the quantity Y of candidate sending positions comprised in each system frame, and the determining, by a network device based on a sending parameter, N candidate sending positions for transmitting SSBs in one periodicity T1 comprises:

determining, by the network device based on the quantity Y of candidate sending positions comprised in each system frame, the quantity X of system frames of the candidate sending positions comprised in each periodicity

T1, wherein $X=\lceil N/Y \rceil$, and $\lceil \ \rceil$ represents rounding up;

determining, by the network device based on the periodicity T1 and the time interval T2, start time positions of the X system frames of the N candidate sending positions; and

determining, by the network device, start symbol indexes of the Y candidate sending positions comprised in each of the X system frames.

15. The method according to claim 11, wherein the sending parameter comprises the sweeping periodicity T3 and the quantity X of system frames of the candidate sending positions comprised in each periodicity T1, and the determining, by a network device based on a sending parameter, N candidate sending positions for transmitting SSBs in one periodicity T1 comprises:

determining, by the network device, the time interval T2 based on the sweeping periodicity T3 and the quantity X of system frames of the candidate sending positions comprised in each periodicity T1, wherein $1 \le T2 \le \lfloor T3/X \rfloor$, and $\lfloor \ \rfloor$ represents rounding down;

determining, by the network device based on the periodicity T1 and the time interval T2, start time positions of the X system frames of the N candidate sending positions; and

determining, by the network device, start symbol indexes of the Y candidate sending positions comprised in each of the X system frames, wherein $Y=\lceil N/X \rceil$, and $\lceil \ \rceil$ represents rounding up.

16. The method according to claim 11, wherein the sending parameter comprises the time interval T2 and the quantity X of system frames of the candidate sending positions comprised in each periodicity T1, and the determining, by a network device based on a sending parameter, N candidate sending positions for transmitting SSBs in one periodicity T1 comprises:

determining, by the network device based on the periodicity T1 and the time interval T2, start time positions of the X system frames of the N candidate sending positions; and

determining, by the network device, start symbol indexes of the Y candidate sending positions comprised in each of the X system frames, wherein $Y=\lceil N/X \rceil$, and $\lceil \ \rceil$ represents rounding up.

17. The method according to any one of claims 12 to 16, wherein the determining, by the network device based on the periodicity T1 and the time interval T2, start time positions of the X system frames of the N candidate sending positions comprises:

determining, by the network device based on the periodicity T1 and the time interval T2, that start time positions of the X system frames of the N candidate sending positions in an $m^{th}$ periodicity T1 are respectively {(m-1)T1',(m-1)T1'+T2',(m-1)T1'+2T2',...,(m-1)T1'+(X-1)T2'}, wherein m is a positive integer, wherein

if T1 represents duration of the periodicity, T1' = T1, or if T1 represents a quantity of system frames comprised in the periodicity, T1' = $T_{frame}$ · T1, and if T2 represents duration of the time interval, T2' = T2, or if T2 represents a quantity of system frames comprised in the time interval, T2' = $T_{frame}$ · T2, wherein $T_{frame}$ represents duration of one system frame.

18. The method according to any one of claims 12 to 17, wherein the determining, by the network device, start symbol indexes of the Y candidate sending positions comprised in each of the X system frames comprises:

if a subcarrier spacing is 15 kHz, determining, by the network device, that the start symbol indexes of the Y candidate sending positions comprised in each system frame are Y values in {2, 8}+14×n, wherein n=0 or 1, or n=0, 1, 2, or 3;

if a subcarrier spacing is 30 kHz, determining, by the network device, that the start symbol indexes of the Y candidate sending positions comprised in each system frame are Y values in {4, 8, 16, 20}+28×n, wherein n=0, or n=0 or 1;

if a subcarrier spacing is 30 kHz, determining, by the network device, that the start symbol indexes of the Y candidate sending positions comprised in each system frame are Y values in {2, 8}+14×n, wherein n=0 or 1, or n=0, 1, 2, or 3;

if a subcarrier spacing is 120 kHz, determining, by the network device, that the start symbol indexes of the Y candidate sending positions comprised in each system frame are Y values in {4, 8, 16, 20}+28×n, wherein n=0, 1, 2, 3, 5, 6, 7, 8, 10, 11, 12, 13, 15, 16, 17, or 18; or

if a subcarrier spacing is 240 kHz, determining, by the network device, that the start symbol indexes of the Y candidate sending positions comprised in each system frame are Y values in {8, 12, 16, 20, 32, 36, 40, 44}+56×n, wherein n=0, 1, 2, 3, 5, 6, 7, or 8.

19. The method according to claim 18, wherein if a carrier frequency is in FR2 and the subcarrier spacing is 120 kHz:

if Y=32, the network device determines that the start symbol indexes of the Y candidate sending positions comprised in each system frame are {4, 8, 16, 20}+28×n, wherein n=0, 1, 2, 3, 5, 6, 7, or 8;

if Y=8, the network device determines that the start symbol indexes of the Y candidate sending positions comprised in each system frame are {4, 8, 16, 20}+28×n, wherein n=0 or 1; or

if Y=8, the network device determines that the start symbol indexes of the Y candidate sending positions comprised in each system frame are {2, 8}+14×n, wherein n=0, 1, 2, or 3.

20. The method according to any one of claims 11 to 19, wherein a first SSB in the at least one SSB comprises a physical broadcast channel PBCH, the PBCH comprises system frame number SFN indicator bits and/or a half-frame indicator bit, and the SFN indicator bits and/or the half-frame indicator bit are/is used to determine a number of the first SSB.

21. The method according to claim 20, wherein the PBCH comprises the SFN indicator bits, and the number of the first SSB is represented by using $\lceil \log_2 N \rceil$ bits; and

when N>64, $\lceil \log_2 N \rceil - 6$ bits in the SFN indicator bits are used to determine the number of the first SSB; or

when N>128, $\lceil \log_2 N \rceil - 6$ bits or $\lceil \log_2 N \rceil - 7$ bits in the SFN indicator bits are used to determine the number of the first SSB.

22. The method according to claim 21, wherein the $\lceil \log_2 N \rceil - 6$ bits in the SFN indicator bits are used to determine the number of the first SSB, and the method further comprises:

determining, by the network device based on the time interval T2, that the $\lceil \log_2 N \rceil - 6$ bits in the SFN indicator bits are a $(\log_2 (T2'' \cdot 2))^{th}$ bit to a ($\lceil \log_2 (N \cdot T2'' \cdot 2) \rceil - 7$)$^{th}$ bit in the SFN indicator bit; and

determining, by the network device based on the quantity Y of candidate sending positions comprised in each system frame, that the $(\log_2 (T2'' \cdot 2))^{th}$ bit to the ($\lceil \log_2 (N \cdot T2'' \cdot 2) \rceil - 7$)$^{th}$ bit in the SFN indicator bits are a $(\log_2 (Y \cdot 2))^{th}$ bit to a ($\lceil \log_2 (N \cdot Y \cdot 2) \rceil - 7$)$^{th}$ bit in the $\lceil \log_2 N \rceil$ bits.

23. The method according to claim 21, wherein the $\lceil \log_2 N \rceil - 7$ bits in the SFN indicator bits are used to determine the number of the first SSB, and the method further comprises:

determining, by the network device based on the time interval T2, that the $\lceil \log_2 N \rceil - 7$ bits in the SFN indicator bits are a $(\log_2 (T2'' \cdot 2))^{th}$ bit to a ($\lceil \log_2 (N \cdot T2'' \cdot 2) \rceil - 8$)$^{th}$ bit in the SFN indicator bits; and

determining, by the network device based on the quantity Y of candidate sending positions comprised in each system frame, that the $(\log_2 (T2'' \cdot 2))^{th}$ bit to the ($\lceil \log_2 (N \cdot T2'' \cdot 2) \rceil - 8$)$^{th}$ bit in the SFN indicator bits are a $(\log_2 (Y \cdot 2))^{th}$ bit to a ($\lceil \log_2 (N \cdot Y \cdot 2) \rceil - 8$)$^{th}$ bit in the $\lceil \log_2 N \rceil$ bits, wherein T2'' and Y are powers of 2, and if T2 represents a quantity of system frames comprised in the time interval, T2'' = T2 , or if T2 represents duration of the time interval, T2'' = T2/$T_{frame}$ , wherein $T_{frame}$ represents duration of one system frame.

24. A communication apparatus, comprising at least one processor, wherein the at least one processor is configured to: be coupled to a memory, and read and execute instructions in the memory, to implement the method according to any one of claims 1 to 10, or to implement the method according to any one of claims 11 to 23.

25. A computer-readable storage medium, wherein the computer-readable storage medium stores a computer program, and when the computer program is executed, the method according to any one of claims 1 to 10 is performed, or the method according to any one of claims 11 to 23 is performed.

26. A computer program product comprising instructions, wherein when the computer program product runs on a computer, the computer is enabled to perform the method according to any one of claims 1 to 10, or perform the method according to any one of claims 11 to 23.

100

102

103

104

101

105

107

106

FIG. 1

Transparent
forwarding satellite

UE

Non-3GPP
radio
protocol

Non-3GPP
radio
protocol

N3IWF and
satellite hub

5G CN

NG (=N2/N3)

N6

DN

(a)

Transparent
forwarding satellite

UE

NR radio
protocol

NR radio
protocol

gNB

5G CN

NG (=N2/N3)

N6

DN

(b)

FIG. 2

Regenerative
satellite
5G CN

UE
N6
DN
NR radio
protocol
NR radio
protocol
NG (=N2/N3)
gNB-CU

FIG. 3

Method 400

Network device

Terminal device

S410: Determine N candidate
sending positions based on a
sending parameter

S420: At least one SSB

S430: Determine a time position of
the at least one SSB based on a
number of the at least one SSB and
the sending parameter

FIG. 4

Slot including a candidate
sending position

Symbol occupied by the
candidate sending position

T1

T2

SFN #0 ◄ SFN #1 ► SFN #2 SFN #64

...

...

...

...

Candidate
sending
position #0

Candidate
sending
position #1

Candidate
sending
position #8

Candidate
sending
position #9

Candidate
sending
position #0

Candidate
sending
position #1

FIG. 5

Apparatus 1000

Transceiver unit 1010

Processing unit 1020

Storage unit 1030

FIG. 6

Apparatus 2000

Processor 2010

Memory 2030

Transceiver 2020

FIG. 7

Chip system 3000

Logic circuit 3010

Input/Output interface 3020

FIG. 8

## INTERNATIONAL SEARCH REPORT

| International application No. |
|---|
| **PCT/CN2023/102086** |

### A. CLASSIFICATION OF SUBJECT MATTER

H04L5/00(2006.01)i

According to International Patent Classification (IPC) or to both national classification and IPC

### B. FIELDS SEARCHED

Minimum documentation searched (classification system followed by classification symbols)

IPC：H04L H04W

Documentation searched other than minimum documentation to the extent that such documents are included in the fields searched

Electronic data base consulted during the international search (name of data base and, where practicable, search terms used)

CNTXT; VEN; CNKI; ENTXT; 3GPP: 同步信号块, 候选, 位置, 时隙, 符号, 系统帧, 扫描周期, 数目, 个数, 数量, 时间间隔, 编号, 索引, SSB, candidate, position, slot, symbol, SFN, scanning cycle, number, interval, gap, index, PBCH

### C. DOCUMENTS CONSIDERED TO BE RELEVANT

| Category* | Citation of document, with indication, where appropriate, of the relevant passages | Relevant to claim No. |
|---|---|---|
| X | CN 113452489 A (CHINA TELECOM CORP., LTD.) 28 September 2021 (2021-09-28) description, paragraphs [0036]-[0097] | 1, 2, 7, 11, 20, 24-26 |
| X | WO 2020199220 A1 (GUANGDONG OPPO MOBILE TELECOMMUNICATIONS CORP., LTD.) 08 October 2020 (2020-10-08) description, page 6, line 3 to page 8, line 18 | 1, 2, 7, 24-26 |
| X | WO 2021159344 A1 (HUAWEI TECHNOLOGIES CO., LTD.) 19 August 2021 (2021-08-19) description, page 11, line 1 to page 18, line 40 | 11, 20, 24-26 |
| A | CN 110149294 A (HUAWEI TECHNOLOGIES CO., LTD.) 20 August 2019 (2019-08-20) entire document | 1-26 |
| A | CN 110336655 A (BEIJING SPREADTRUM HIGH-TECH COMMUNICATIONS TECHNOLOGY CO., LTD.) 15 October 2019 (2019-10-15) entire document | 1-26 |
| A | CN 113543333 A (HUAWEI TECHNOLOGIES CO., LTD.) 22 October 2021 (2021-10-22) entire document | 1-26 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **28 August 2023** | **18 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/102086**

| Patent document cited in search report | | | Publication date (day/month/year) | Patent family member(s) | | | Publication date (day/month/year) |
|---|---|---|---|---|---|---|---|
| CN | 113452489 | A | 28 September 2021 | None | | | |
| WO | 2020199220 | A1 | 08 October 2020 | US | 2022007316 | A1 | 06 January 2022 |
| WO | 2021159344 | A1 | 19 August 2021 | None | | | |
| CN | 110149294 | A | 20 August 2019 | WO | 2019157910 | A1 | 22 August 2019 |
| CN | 110336655 | A | 15 October 2019 | WO | 2021027694 | A1 | 18 February 2021 |
| CN | 113543333 | A | 22 October 2021 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210891651
- CN 202310709256